(19) Europäisches Patentamt
European Patent Office
Office européen des brevets

(11) Publication number: **0 628 848 A1**

(12) **EUROPEAN PATENT APPLICATION published in accordance with Art. 158(3) EPC**

(21) Application number: **94903103.3**

(51) Int. Cl.5: **G02F 1/15**

(22) Date of filing: **28.12.93**

(86) International application number: **PCT/JP93/01931**

(87) International publication number: **WO 94/15245 (07.07.94 94/15)**

(30) Priority: **28.12.92 JP 349606/92**
**15.02.93 JP 25702/93**
**23.02.93 JP 33535/93**

(43) Date of publication of application: **14.12.94 Bulletin 94/50**

(84) Designated Contracting States: **DE FR GB**

(71) Applicant: **Tonen Corporation**
**1-1 Hitotsubashi, 1-Chome**
**Chiyoda-Ku**
**Tokyo 100 (JP)**

(72) Inventor: **KOSEKI, Keiichi, Tonen Corporation**
**Corporate Res.e& Dev. Lab.,**
**3-1, Nishi-tsurugaoka**
**1-chome, Ohi-machi, Iruma-gun, Saitama (JP)**
Inventor: **OOTO, Natsuko, Tonen Corporation**
**Corporate Res. &rDev. Lab.,**
**3-1, Nishi-tsurugaoka**
**1-chome, Ohi-machi, Iruma-gun, Saitama (JP)**
Inventor: **DEMIZU, Yuzo, Tonen Corporation**
**Corporate Res. & Dev. Lab.,**
**3-1, Nishi-tsurugaoka**
**1-chome, Ohi-machi, Iruma-gun, Saitama (JP)**
Inventor: **OOYAMA Sanae, Tonen Corporation**
**Corporate Res. & Dev. Lab.,**
**3-1, Nishi-tsurugaoka**
**1-chome, Ohi-machi, Iruma-gun, Saitama (JP)**
Inventor: **SAKURADA, Satoshi, Tonen Corporation**
**Corporate Res. & Dev. Lab.,**
**3-1, Nishi-tsurugaoka**
**1-chome, Ohi-machi, Iruma-gun, Saitama (JP)**

(74) Representative: **Fürniss, Peter, Dr.**
**Kuhnen, Wacker & Partner**
**Alois-Steinecker-Strasse 22**
**D-85354 Freising (DE)**

(54) **ELECTROCHROMIC DEVICE.**

(57) An electrochromic device comprises an electrochromic electrode, an opposed electrode and an electrolyte interposed between these electrodes. The electrolyte is made of a thin film of a porous polymer having a refractive index of 1.48 to 1.56 and it is impregnated with ionic conductor dissolved in a solvent: such as a mixture of 2,2-diphenylpropionitrile and a solvent having a lower refractive index than that of the former; a mixture of 1,3-dimethyl-2-imidazolidinone and a compound having a higher refractive index than that of the former; or a mixture of DL-2-phenylbutyronitrile and/or 4-phenylbutyronitrile and a polyalkylene glycol or its ether compound. High transmissivity and excellent EL characteristics are obtained by adjusting the refractive index with the porous polymer film.

EP 0 628 848 A1

Fig.3

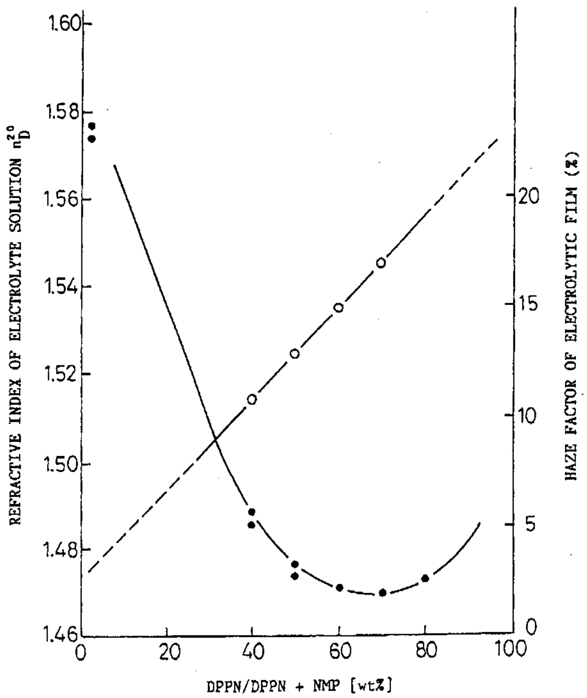
1.60
1.58
1.56
1.54
1.52
1.50
1.48
1.46
REFRACTIVE INDEX OF ELECTROLYTE SOLUTION $n_D^{20}$
20
15
10
5
0
HAZE FACTOR OF ELECTROLYTIC FILM (%)
0
20
40
60
80
100
DPPN/DPPN + NMP [wt%]

## TECHNICAL FIELD

The present invention relates to a novel electrochromic (hereunder abbreviated to EC) device, and more specifically, it relates to an electrochromic device prepared using a polymeric porous thin-film with low light dispersion whose pores are filled with an ionic conductor as an electrolyte, which is suitable for use as a dimming device or display device.

## BACKGROUND ART

An EC device usually consist of an electrolyte, an EC material on a transparent electrode substrate (hereinuder abbreviated to "EC layer") and a counter electrode. An electrolyte which is situated between an EC electrode having a layer composed of an EC layer and a counter electrode. When a voltage is applied between the electrodes, the color of the EC layer changes. This color can be bleached reversibly by changing electric polarity.

This type of EC device is characterized in that large-area display is made possible, operation life is long, response speed is high, coloring efficiency is high, vivid colors may be outputted, and transmittance is high upon decoloring; in recent years this characteristic to change color tones has been utilized in display devices and dimming devices, the suitable response speed has been utilized in anti-glare materials, the memory characteristics have been utilized in memory sensors, etc.

The electrolytes used in this type of EC device may be largely classified into liquid electrolytes and solid electrolytes, the former having disadvantages in that, although liquid electrolytes have a high ionic conductivity and thus excellent response, the fact that they are liquids which means that measures must be taken in the construction and assembly of the device to guard against leaking, and even when such anti-leaking measures are taken, there is still a risk of leaking as a result of damage, or during use. In contrast, while common solid electrolytes do not have the problems mentioned above, their drawback is a poor response duo to their low ionic conductivity.

Here, the present inventors have carried out diligent research to develop a solid electrolyte with a high ionic conductivity, and have found that a polymer electrolytic thin-film prepared by filling the pores of a polymeric porous thin-film with an ionic conductor may be basically handled as a solid, with no risk of leaking, and thus makes an excellent ionic conductor.

If such a polymer electrolytic thin-film is used as the electrolyte for an EC device, the thin-film may simply be sandwiched between the two electrodes after they are formed, and therefore the electrolyte is not deteriorated during formation of the electrodes, and it is possible to prepare a large-area EC device in a process for laminated glass.

On the other hand, as a method for inserting a solid electrolyte with a high ionic conductivity between the two electrodes, there is known a method in which a thin-film layer made of $TaO_x$ or the like is formed by vapor deposition, but since this method includes an electrode-forming step, it is impossible to avoid deterioration of the thin-film layer during the formation of the electrodes and the area cannot be enlarged. In addition, with large-area devices the memory characteristics are impaired as a result of current leakage.

Incidentally, when a polymer electrolytic thin-film is prepared by filling the pores of a polymeric porous thin-film with an ionic conductor, the solvent for the ionic conductor is usually propylene carbonate, dimethoxyethane, $\gamma$-butyrolactone, acetonitrile, polyethylene oxide, polypropylene oxide, or the like. However, all of these solvents have a refractive index ($n_D^{20}$) of 1.48 or less, which is lower than that of typical polymeric porous thin-films such as polyethylene and polypropylene thin-films, and thus when thin-films prepared by filling the above porous thin-films with ionic conductors containing these solvents alone or in admixture are used as electrolytes for EC devices, since the refractive index cannot be matched with the polymeric porous thin-films, it is difficult to produce devices with no dispersion of incident light, i.e. transparent devices. Here, it is necessary that the electrolyte filling the pores of the polymeric porous thin-film have a refractive index close to that of the matrix polymeric porous thin-film, and that it be chemically and electrically stable and heat resistant. In such a case the selection of the organic solvent to be used for the ionic conductor is crucial.

In light of these circumstances, it is an object of the present inventors to provide an electrochromic element with an improved electrolyte solvent and which offers improved light transmittance by having a refractive index matching that of the polymeric porous thin-film, while also having excellent ionic conductivity, low-temperature characteristics, long-term thermal stability and other EC characteristics (such as hue, coloring and decoloring, cycle properties, durability, etc.) and making it possible to prevent erosion of the electrochromic sealant by the solvent.

DISCLOSURE OF THE INVENTION

In order to achieve the above mentioned object, the present invention provides an electrochromic device wherein an electrolyte is situated between the electrochromic electrode and the counter electrode, which is characterized by employing, as the above electrolyte, an electrolytic thin-film prepared by filling the pores of a polymeric porous thin-film with an ionic conductor, the above ionic conductor including, as the solvent, a solvent selected from (i)-(vi) below.

(i) A mixture of (A) 2,2-diphenylpropionitrile and (B) a solvent with a lower refractive index than 2,2-diphenylpropionitrile (excluding polyethers).

(ii) A mixture of (C) dibenzyl ketone and a solvent with a lower refractive index than (C) the dibenzyl ketone.

(iii) A mixture of (A) 2,2-diphenylpropionitrile, (C) dibenzyl ketone and (D) a solvent with a lower refractive index than the above polymeric porous thin-film.

(iv) A mixture of (E) 1,3-dimethyl-2-imidazolizinone and (F) a compound with a higher refractive index than 1,3-dimethyl-2-imidazolizinone (excluding 2,2-diphenylpropionitrile).

(v) A mixture of (G) DL-2-phenylbutyronitrile and/or 4-phenylbutyronitrile and (H) polyalkylene glycol or an ether compound thereof.

(vi) At least one aromatic nitrile compound represented by the general formula (I) below.

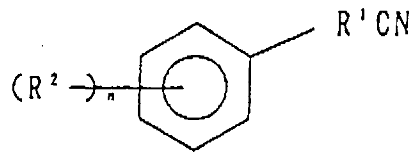

(where $R^1$ is an alkylene, cycloalkylene group or compound group thereof with 2-10 carbon atoms, one of the bonding sites bonding with the benzene ring and the other bonding site bonding with the CN group; $R^2$ is a hydrogen atom, halogen atom or an alkyl or alkoxy group with 1-3 carbon atoms; and m is an integer 1-3).

Furthermore, according to the present invention there is provided an electrochromic element characterized by employing an electrolytic thin-film prepared by filling the pores of a polymeric porous thin-film with a solution of a viologen derivative dissolved in a polyethylene oxide-type electrolyte.

Of these solvents, the present invention is especially suitable for the solvents in (i) and (iv)-(vi).

One of the important uses of the electrochromic element according to the present invention is as an anti-glare mirror. In particular, if an EC device and a mirror are combined for the back mirror of an automobile, the glare of headlights from cars approaching from the rear at night may be reduced as a result of the lowered light reflectivity.

BRIEF DESCRIPTION OF THE DRAWINGS

Fig. 1 is a sectional view of an example of an EC device according to the present invention which is used as a reflection-type display device.

Fig. 2 is a sectional view of an example of an EC device according to the present invention which is used as a transmitting-type dimming device.

Fig. 3 is a graph showing the relationship between solvent composition and the refractive index and haze factor in Example 1.

Fig. 4 is a graph showing the relationship between solvent composition and ionic conductivity in Example 1.

Fig. 5 is a graph showing the temperature dependence of the ionic conductivity in Examples 1 and 2.

Fig. 6 is a graph showing the relationship between solvent composition and refractive index and haze factor in Example 2.

Fig. 7 is a graph showing the relationship between solvent composition and ionic conductivity in Example 2.

Fig. 8 is a graph showing the relationship between solvent composition and refractive index and haze factor in Example 4.

Fig. 9 is a graph showing the relationship between solvent composition and ionic conductivity in Example 4.

Fig. 10 is a graph showing the temperature dependence of the ionic conductivity in Example 4.

Fig. 11 is a sectional view of the electrochromic device prepared in Example 17.

Figs. 12A and 12B are graphs showing the applied voltage and the response current for the electrochromic device in Example 17.

Fig. 13 is a sectional view of the EC display device in Example 18.

Fig. 14 is a sectional view of the transmitting-type dimming device in Example 18.

Best Mode for Carrying Out the Invention

An explanation of the present invention is given below.

In an EC element according to the present invention, the electrolyte used is a polymer electrolytic film prepared by filling the pores of a polymeric porous thin-film with an ionic conductor. This electrolytic film has many advantages, including that it may be basically handled as a solid and thus there is no risk of liquid leakage, and it has excellent ionic conductivity, may be made into a thin film, etc.

The above mentioned polymeric porous thin-film to be used normally has a film thickness of 0.1-50 μm, preferably 1.0-25 μm, a porosity rate of 40-90%, preferably 60-90%, a rupture strength of 200 $kg/cm^2$ or greater, preferably 500 $kg/cm^2$ or greater, and an average through-hole size of 0.001-1.0 μm.

If the film thickness is less than 0.1 μm then its mechanical strength as a support film will be impaired and its handleability will he so poor as to be impractical, while if the film thickness exceeds 50 μm there will be an increase in the effective resistance, which is not desirable. If the porosity rate is less than 40% then its ionic conductivity as an electrolyte will be insufficient, while if it exceeds 90% then its mechanical strength as a support film will be so low as to be impractical.

Furthermore, if the rupture strength is less than 200 $kg/cm^2$ the film will not be practical as a support film. Also, the average through-hole size is not particularly restricted so long as it is a pore size which allows fixation of the ionic conductor in the pores, and it is appropriately selected depending on the material of the polymeric thin-film and the shape of the pores, usually being in the range of 0.001-1.0 μm.

The polymeric porous thin-film to be used according to the present invention functions in this manner as a support for the ionic conductor, and it is made of a polymer material with excellent mechanical strength. Examples of such polymer materials include polyolefins, polycarbonates, polyesters, polymethacrylates, polyacetals, polyvinylidene chloride, polyvinylidene fluoride, polytetrafluoroethylene, etc., but from the point of view of chemical stability polyolefins, polyvinylidene fluoride and polytetrafluoroethylene are preferred for use. Furthermore, of these, polyolefins with a weight average molecular weight of $5 \times 10^5$ or greater, preferably $1 \times 10^6$ - $1 \times 10^7$, are particularly preferable from the point of view of ease of forming the porous structure and forming the thin film, and mechanical strength.

Polyolefins preferred for use are crystalline polyolefins made of homopolymers or copolymers of α-olefins such as ethylene, propylene, butene-1, 4-methyl-1-pentene, and specific examples include polyethylene, polypropylene, ethylene/propylene copolymer, poly(butene-1), poly(4-methyl-1-pentene), and the like. Particularly suitable among these are polyethylene and polypropylene polymers with a weight average molecular weight of $5 \times 10^5$ or greater.

The weight average molecular weight of the polyolefin affects the mechanical strength of the resulting thin film, and since for example, using an ultra-high molecular weight polyolefin makes it possible to obtain an ultra-thin, high-strength thin film by super drawing, a high ionic conductivity thin-film with a low effective resistance may be obtained. A polyolefin with a weight average molecular weight of less than $5 \times 10^5$ may be blended with the above mentioned polyolefin, but if the system contains no polyolefin with a weight average molecular weight of $5 \times 10^5$ or greater then an ultra-thin, high-strength film will not be obtainable by super drawing.

As an explanation of an example of a suitable method for producing a polymeric porous thin-film to be used according to the present invention, first a polyolefin with a weight average molecular weight of $5 \times 10^5$ or greater is added to a solvent such as liquid paraffin and heated to dissolution to prepare a homogeneous solution with a concentration of about 1-15 wt%, and then a sheet is formed from this solution and cooled rapidly to make a gelatinous sheet. Next, the gelatinous sheet is subjected to extraction with a volatile solvent such as methylene chloride, to adjust the amount of the solvent in the sheet to 10-90 wt%. The gelatinous sheet is then heated to a temperature below the melting point of the polyolefin and drawn to an area of 10 times or greater, after which the solvent contained in the drawn film is removed by extraction with a volatile solvent such as methylene chloride, and it is then dried to obtain the desired polymeric porous thin-film.

This type of solid polymeric porous thin-film normally has a refractive index ($n_D^{20}$, same hereunder in the present specification) of about 1.48-1.56. According to the present invention, the refractive index of this and of the electrolyte solution are adjusted to match as much as possible, but since the refractive index of

the electrolyte solution may be adjusted within a wide range, the value of the refractive indexes of the various solid polymeric porous thin-films are not necessarily important.

The present invention is characterized in that a solvent selected from (i) - (vi) above is used as the solvent for the ionic conductor (electrolyte solution). An explanation of each is given in order below.

The solvent in (i) is a mixture of (A) 2,2-diphenylpropionitrile and (B) a solvent with a lower refractive index than 2,2-diphenylpropionitrile (excluding polyethers).

It has been found that by using 2,2-diphenylpropionitrile (DPPN) as the main component of the electrolyte solvent and mixing it with a low-refractive-index solvent to adjust the refractive index, it is possible to avoid light dispersion by adjustment of the refractive indexes of the polymeric porous thin-film and the electrolyte, as well as to prevent escape of the solvent from the electrolytic thin-film, while also achieving excellent properties (ionic conductivity, durability, coloring, decoloring, etc.) which are necessary for electrochromic devices.

From research conducted by the present inventors, it has been discovered that if the refractive index of a multiple-component mixed solvent is matched with the refractive index of a polymeric porous thin-film (usually 1.48-1.56), the properties including volatility of the solvent, ionic conductivity, etc. are largely dependent on the type of the high-refractive-index solvent, while the dependence on the type of the low-refractive-index solvent is relatively low, and thus for the object of the present invention, the most suitable solvent is obtained by selecting 2,2-diphenylpropionitrile as the high-refractive-index solvent.

2,2-diphenylpropionitrile is a compound having the following chemical formula

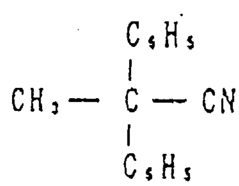

and its refractive index is 1.572.

The solvent to be mixed with 2,2-diphenylpropionitrile (DPPN) is one which can dissolve ionic conductive solutes and which allows the refractive index of the mixed solvent to be adjusted to the refractive index of the polymeric porous thin-film, that is, it should be one with a refractive index lower than DPPN, and preferably one with a refractive index in the range of 1.40-1.48. Examples which may be given of low-refractive-index solvents include N-methyl pyrrolidone (refractive index: 1.468), 2-pyrrolidone (refractive index: 1.486), 3-pyrrolidone (refractive index: 1.443), dimethyl sulfoxide (refractive index: 1.479), dimethylformamide (refractive index: 1.431), 2,5-dimethylpyrrole (refractive index: 1.505), 1,3-dimethyl-2-imidazolizinone (refractive index: 1.471) and other polyethers, and of these the most suitable solvents are pyrrolidone compounds, dimethyl sulfoxide, imidazolizinone compounds, polyethers, etc. However, since the combination of 2,2-diphenylpropionitrile and polyethers has already been disclosed (specification of Japanese Patent Application HEI No. 3-122547), it is excluded from the solvents in (i).

The mixed solvent in (i) consists primarily of a combination of DPPN and a low-refractive-index solvent, particularly a solvent with a refractive index of about 1.40-1.48, but if necessary a solvent with a refractive index equal to that of DPPN, or a solvent with a refractive index which is higher than or much lower than that of DPPN, may be used in admixture therewith so long as the object of the present invention is not hindered.

The mixing ratio of the DPPN [component (A)] and the low-refractive-index solvent [component (B)] should be such that the refractive index of the mixed solvent matches the refractive index of the polymeric porous thin-film, and generally component (A) and component (B) are in a weight ratio of 10:90 - 90:10, preferably 20:80 - 80:20. Complete matching of the refractive indexes of the polymeric porous thin-film and the ionic conductor is ideal, but according to the present invention adjustment within the range of ±0.005 is possible.

The solvent in (ii) is a mixture of (C) dibenzyl ketone and (D) a solvent with a lower refractive index than dibenzyl ketone (excluding polyethers).

Dibenzyl ketone is a compound having a chemical formula $(C_6H_5)CH_2 \bullet CO \bullet CH_2(C_2H_5)$ and a refractive index of 1.580.

(C) Dibenzyl ketone was also found to have an effect similar to that of (A) 2,2-diphenylpropionitrile. The types, mixing ratios, etc. of the low-refractive-index solvent to be combined therewith are the same as for the solvent in (i).

The solvent in (iii) is a mixture of (A) 2,2-diphenylpropionitrile, (C) dibenzyl ketone and (D) a solvent with a lower refractive index than the polymeric porous thin-film, and its mixture is the same as for the solvent in (i) and the solvent in (ii).

Therefore, its effect and construction are also the same as those of the solvents in (i) and (ii).

The solvent in (iv) is a mixture of (E) 1,3-dimethyl-2-imidazolizinone and (F) a compound with a higher refractive index than 1,3-dimethyl-2-imidazolizinone (excluding 2,2-diphenylpropionitrile).

It has also been found that by using 1,3-dimethyl-2-imidazolizinone (DMI) as the main component of the electrolyte solvent and mixing it with a high-refractive-index solvent to adjust the refractive index, the refractive indexes of the polymeric porous thin-film and the electrolyte may be adjusted to avoid light dispersion, and escape of the solvent from the electrolytic thin-film may be prevented while also achieving the excellent properties (ionic conductivity, durability, coloring, decoloring, etc.) which are necessary for electrochromic devices.

From research conducted by the present inventors, it has become clear that when the refractive index of a multiple-component mixed solvent is matched with the refractive index of a polymeric porous thin-film (usually 1.48-1.56), the properties including volatility of the solvent, ionic conductivity, etc. have a large influence on the ease of preparation, durability and low-temperature operating characteristics of the mixture, and it has been experimentally shown that 1,3-dimethyl-2-imidazolizinone (DMI) has very satisfactory properties from this point of view. Thus, for the object of the present invention, the most suitable solvent is obtained by selecting 1,3-dimethyl-2-imidazolizinone as the low-refractive-index solvent.

1,3-dimethyl-2-imidazolizinone is a compound having the following chemical formula

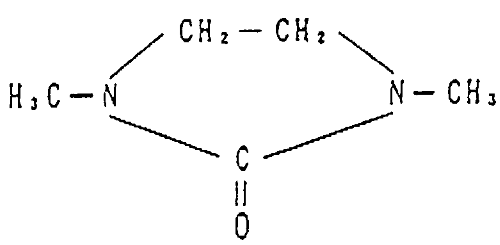

and its refractive index is 1.471.

The compound to be mixed with 1,3-dimethyl-2-imidazolizinone is one which provides a mixed solvent capable of dissolving ionic conductive solutes and which allows the refractive index of the mixed solvent to be adjusted to the refractive index of the polymeric porous thin-film, that is, it should be one with a refractive index higher than that of DMI, and preferably one with a refractive index in the range of 1.48-1.65. The high-refractive-index compound may be mixed or dissolved with DMI, and examples thereof include 2-pyrrolidone (refractive index; 1.486), 2,5-dimethylpyrrole (refractive index: 1.505), 4-phenylbutyronitrile, DL-2-phenylbutyronitrile, 1-phenyl-1-cyclopropanecarbonitrile, hydrocinnamonitrile, benzoacetonitrile, etc.; of these the most suitable solvents are DL-2-phenylbutyronitrile, 1-phenyl-1-cyclopropanecarbonitrile and benzoacetonitrile. However, since the combination of 1,3-dimethyl-2-imidazolizinone and 2,2-diphenylpropionitrile has already been disclosed (specification of Japanese Patent Application HEI No. 4-159390), it is excluded from the solvents in (iv).

In particular, a system in which 1,3-dimethyl-2-imidazolizinone and dibenzosuberone and/or benzoacetonitrile is combined with lithium perchlorate ($LiClO_4$) as the ion conductor has an advantage in that the electrolyte has a high ionic conductivity even at a low temperature of -20 °C.

The mixed solvent according to the present invention consists primarily of a combination of DMI and a high-refractive-index compound, particularly a compound with a refractive index of about 1.48-1.65, but if necessary a compound with a refractive index equal to that of DMI, or a solvent with a refractive index which is lower than or much higher than that of DMI, may be used in admixture therewith so long as the object of the present invention is not hindered.

The mixing ratio of the DMI [component (A)] and the high-refractive-index compound [component (B)] should be such that the refractive index of the mixed solvent matches the refractive index of the polymeric porous thin-film, and generally component (A) and component (B) are in a weight ratio of 10:90 - 90:10, preferably 20:80 - 80:20. Complete matching of the refractive indexes of the polymeric porous thin-film and the ionic conductor is ideal, but according to the present invention adjustment within the range of ±0.005 is possible.

The solvent in (v) is a solvent containing (G) DL-2-phenylbutyronitrile and/or 4-phenylbutyronitrile and (H) polyalkylene glycol or an ether compound thereof, and preferably further contains (A) 2,2-diphenylpropionitriie

It has been found that by using the above mentioned components (G) and (H) as the electrolyte solvent, the solubility of the supporting alkali metal salt, etc. is high and a greater ionic conductivity is achieved, and that by varying the mixing ratio of the solvent, adjustment of the refractive index is facilitated and the electrolyte is also chemically stable; in addition, it has been found that by adding component (A) the adjustment of the refractive index is further facilitated, and the electrochemical stability is increased.

The refractive index of the solvent in (v) is generally in the range of 1.500-1.57, and for example, that of DL-2-phenylbutyronitrile is $n_D^{20} = 1.5086$, that of 4-phenylbutyronitrile is $n_D^{20} = 1.5143$, and that of 2,2-diphenylpropionitrile is $n_D^{20} = 1.5720$. Furthermore, according to the present invention, the mixing ratio of components (A), (B) and (C), the type and molecular weight of component (B), etc. may be varied for fine adjustment of the refractive index of the solvent (electrolyte). For example, if a fine porous polyethylene film is used, the refractive index of the electrolyte solution must be around 1.523-1.564 to lower the haze factor to 3% or lower. The difference between this refractive index and the refractive index of the polymeric porous thin-film is preferably 0.01 or less.

DL-2-phenylbutyronitrile is a compound having the following structure.

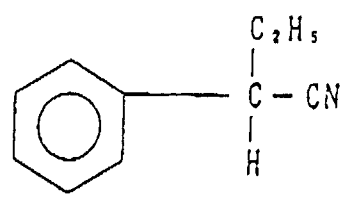

2,2-diphenylpropionitrile is a compound having the following structure.

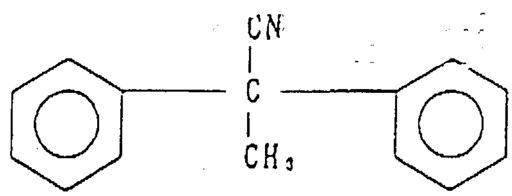

Polyalkylene glycol or an ether compound thereof is a compound represented by the following general formula.

There may be used a mixed solvent containing a polyether represented by

$R^1O\text{ -}(R^2O)_n\text{-}R^3$ [I]

In the above general formula [I], $R^1$ and $R^3$ are each a hydrogen atom or an alkyl group of 1-4 carbon atoms, and they may be the same or different. The above alkyl group may be a methyl, ethyl, n-propyl, isopropy, n-butyl, isobutyl, sec-butyl or t-butyl group. $R^2$ is an alkylene group of 2-4 carbon atoms, and it may be linear or branched. The above alkylene group may be an ethylene, a linear or branched propylene or a linear or branched butylene group. Furthermore, the polyether thereof may have 2 or more alkylene groups per molecule. Also, n is an integer in the range of 1-100.

As such polyethers there may be mentioned, for example, polyethylene glycol, polypropylene glycol, polybutylene glycol, polyoxyethylene polyoxypropylene glycol, polyoxyethylene monomethyl ether, polyoxyethylene dimethyl ether, polyoxyethylene monoethyl ether, polyoxyethylene diethyl ether, polyoxyethylene monopropyl (n- or iso) ether, polyoxyethylene dipropyl (n- or iso) ether, polyoxypropylene monomethyl ether, polyoxypropylene dimethyl ether, polyoxypropylene monoethyl ether, polyoxypropylene diethyl ether, polyoxypropylene monopropyl (n- or iso) ether, polyoxypropylene dipropyl (n-or iso) ether, polyoxyethylene polyoxypropylene monomethyl ether, polyoxyethylene polyoxypropylene dimethyl ether, polyoxyethylene polyoxypropylene monoethyl ether, polyoxyethylene polyoxypropylene diethyl ether, polyoxyethylene polyoxypropylene monopropyl (n- or iso) ether, polyoxyethylene polyoxypropylene dipropyl (n- or iso) ether, polyoxyethylene monobutyl (n-, iso, sec- or t-) ether, polyoxyethylene dibutyl (n-, iso, sec- or t-) ether, polyoxybutylene monomethyl ether, polyoxybutylene dimethyl ether, etc., but this list is in no way restrictive. These polyethers may be used alone or 2 or more thereof may be used in combination, and particularly suitable among them are polyoxyethylene dimethyl ether and polypropylene dimethyl ether.

The average molecular weight of the polyalkylene glycol or its ether compound is suitably 100-800. If the average molecular weight is less than 100, the cycle test of the electrochromic layer will be unsatisfactory. Also, if the average molecular weight is greater than 800, the ionic conductivity of the electrolyte solution at low temperatures will be unsatisfactory, and therefore the response of the element will not be slow especially at low temperatures, and precipitation of the solute will occur because of lowering of the salt solubility of the solution in low temperature storage.

The mixing amounts of these components are preferably in the range of 20-90 wt% for component (A), 1-30 wt% for component (B) and 20-65 wt% for component (C). If component (A) is present at less than 20 wt% the tonic conductivity is lowered, and at greater than 90 wt% the refractive index is raised, increasing the haze factor. If component (B) is present at less than 1 wt% the lithium salt or other electrolytic substance is difficult to melt, and at greater than 30 wt% the refractive index is too small. If component (C) is present at less than 20 wt% the refractive index is too small, and at greater than 65 wt% the tonic conductivity is low and the electrolyte is difficult to melt.

Another solvent may be combined with the mixed solvent in (v) so long as the object of the present invention is not hindered. Such solvents which may be used include one, two or more selected from, for example, propylene carbonate, dimethoxyethane, γ-butyrolactone, acetonitrile, benzonitrile, benzaldehyde, methyl salicylate, benzylalcohol, 3-chlorobenzonitrile, α-trinitrile and the like.

The solvent in (vi) is at least one aromatic nitrile compound represented by the following general formula.

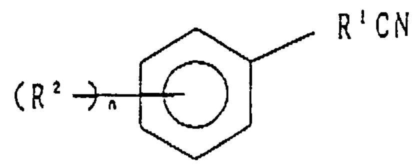

(where $R^1$ is an alkylene, cycloalkylene group or compound group thereof with 2-10, preferably 2-3 carbon atoms, one of the bonding sites bonding with the benzene ring and the other bonding site bonding with the CN group; $R^2$ is a hydrogen atom, halogen atom or an alkyl or alkoxy group with 1-3 carbon atoms; and m is an integer 1-3).

In other words, it is an aromatic nitrile compound with a basic structure wherein a hydrogen atom of an alkyl, cycloalkyl or compound group thereof which is bonded to a benzene ring with 2-10 carbon atoms and having no unsaturated bonds, is substituted with a CN group, and an additional 1-3 hydrogen atoms of the benzene ring may be substituted as deemed appropriate.

Examples which may be given of such an aromatic nitrile compound include 1-phenyl-1-cyclopropane carbonitrile, DL-2-phenylbutyronitrile, 4-phenylbutyronitrile, 1-phenyl-1-cyclohexane carbonitrile, hydrocinnamonitrile, etc., and of these, examples of the most suitable compounds are DL-2-phenylbutyronitrile represented by the following formula,

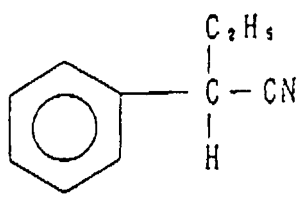

4-phenylbutyronitrile represented by the following formula,

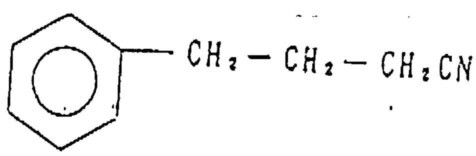

1-phenyl-1-cyclopropane carbonitrile represented by the following formula,

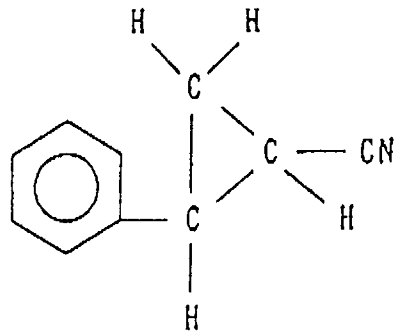

and hydrocinnamonitrile represented by the following formula

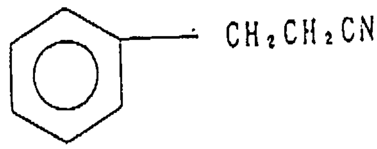

It has been found that by using at least one of the above mentioned aromatic nitrile compounds as the electrolyte solvent, it is possible to achieve electrochemical stability, and particularly a lower haze value even at low temperatures, with satisfactory transparency and light transmittance, a high ionic conductivity of the electrolyte thin-film and good stability with sealants without corrosion thereof, and also to obtain excellent properties (ionic conductivity, durability, coloring, decoloring, etc.) which are necessary for electrochromic devices.

Another solvent may be combined with the mixed solvent according to the present invention so long as the object of the present invention is not hindered. Such solvents which may be used include one, two or more selected from, for example, propylene carbonate, dimethoxyethane, γ-butyrolactone, acetonitrile, benzonitrile, benzaldehyde, methyl salicylate, benzylalcohol, 3-chlorobenzonitrile, α-trinitrile, polyethylene glycol dimethyl ether, 2,2-diphenylpropionitrile and the like.

The solute of the ionic conductor (electrolyte solution) to be used according to the present invention may be any electrolyte which is soluble in the above mentioned solvent and is not particularly limited; for example, alkali metal salts, alkaline earth metal salts, proton acids, etc. may be used. As the anions of these solutes there may be mentioned for example, halogen ions, sulfate ion, phosphate ion, perchlorate ion, thiocyanate ion, trifluomethane sulfonate ion, borofluoride ion, etc. Specific examples of such solutes include lithium fluoride, lithium iodide, sodium iodide, lithium perchlorate, sodium thiocyanate, lithium trifluomethane sulfonate, lithium borofluoride, lithium hexafluophosphate, phosphoric acid, sulfuric acid, trifluomethane sulfonic acid, tetrafluoethylene sulfonic acid, hexafluobutane sulfonic acid, etc., and these may be used alone or with 2 or more thereof in combination.

There are no particular restrictions on the method of filling the pores of the polymeric porous thin-film with the above mentioned ionic conductor, and for example, any method such as immersion, vacuum impregnation, application, spraying or the like may be used.

According to the present invention, there is also provided a film which employs as the electrolyte a solution prepared by dissolving a viologen derivative in a polyethylene oxide-type electrolyte.

The solvent of this electrolytic solution also has specific characteristicS, and it is used in combination with particular solutes.

That is, as the ECD employing an electrolytic thin-film prepared by filling the pores of a polymeric porous thin-film with an ionic conductor, which was explained under the section Background Art, there was disclosed an ECD whose preparation involved dissolving a viologen derivative in a polyethylene oxide as the polymeric solid electrolyte, and sandwiching it between the functioning electrode and the counter electrode; however, an ECD prepared by dissolving a viologen derivative in this polyethylene oxide polymeric solid electrolyte has the disadvantages of a low film strength and difficulty of enlargement, as a result of the use of the polymeric solid polyethylene oxide.

Here, in order to overcome these disadvantages, the present invention employs a solution of a viologen derivative dissolved in a polyethylene oxide-type electrolyte.

The viologen derivative is a derivative of 4,4'-bipyridine, and it is an oxidizing/reducing compound which is colorless in its oxidized form and blue to violet in its reduced form. Typical methylated and benzylated

derivatives of 4,4'-bipyridine are shown below. This viologen derivative has the advantage of allowing different colors to be displayed by selection of the type of compound.

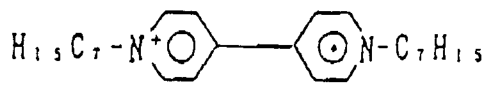
(blue/violet)

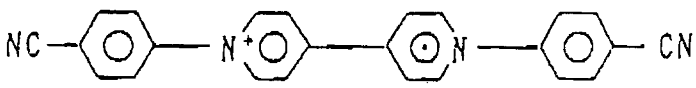
(green)

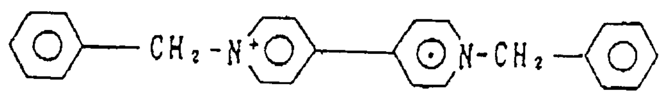
(violet)

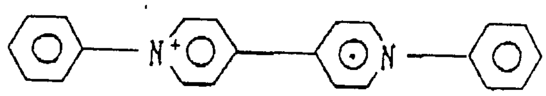
(black/violet)

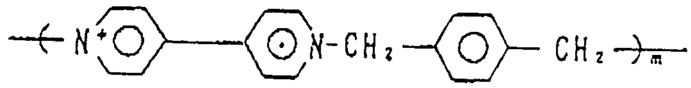
(blue)

The viologen derivative is dissolved in the polyethylene oxide-type electrolyte. According to the present invention, a polyethylene oxide-type electrolyte of molecular weight approximately 100-1000 is used. If the molecular weight is lower than this range then it will not be easily maintained in the pores of the thin film, and if it is higher than this range then the viscosity will be too high, thus lowering the ionic conductivity.

In the ECD obtained according to the present invention, similar to Japanese Unexamined Patent Application HEI No. 3-67227, the pores of a solid polymeric porous thin-film are filled with the above-obtained product to construct an electrolytic thin-film. Because a coloring substance is contained in the electrolyte, the electrolytic thin-film is cost effective, and it is possible to preserve the strength of the polymeric porous thin-film, while allowing the film to be made thinner and with a larger area (e.g. 10 cm square).

The solid polymeric porous thin-film to be used and the filling of the electrolyte therein may be the same as described earlier.

The EC element according to the present invention is prepared by sandwiching the polymeric porous thin-film obtained above, whose pores are filled with an ion conductor, between an EC electrode and a counter electrode, and this EC electrode may be produced by constructing an EC layer on a transparent electrode substrate. Also, as the transparent electrode substrate there may be used one which employs a transparent conductive film such as indium tin oxide or tin oxide on a transparent substrate such as a normal glass substrate or transparent film.

The following is an explanation of an example of an EC device according to the present invention with reference to the attached drawings. Fig. 1 is a sectional view of an example of an EC device according to the present invention which is used as a reflection-type display device, and it shows an construction with successive lamination on a substrate 1 of a counter electrode 2, a background plate 3, a polymer electrolytic thin-film 4, an EC layer 5 constituting an EC electrode, a transparent conductive film 6 and a transparent substrate 7. Since this display element is in a reflection mode, the substrate 1 does not necessary need to be transparent, and it may be a non-transparent plate.

The material to be used as the counter electrode 2 has low generation of hydrogen and oxygen, good reversibility of the electrochemical oxidation-reduction reaction, and a large electrical capacity. Such materials include, for example, carbon, composite materials of transition metal compounds and carbon, composite materials of metal oxides and carbon, etc. The thickness of the counter electrode 2 may usually be selected in the range of 1000 Å to 10 $\mu$m.

The background plate 3 to be used may be a normal white background material, for example alumina powder kneaded with a binder to form a sheet, and it may also serve as the counter electrode 2.

The polymer electrolytic thin-film 4 to be used may be a polymeric porous thin-film whose pores are filled with an ionic conductor, such as one prepared in the manner described above.

EC materials to be used for the EC layer 5 are mainly of two types, cathodic materials which undergo coloring by reduction and anodic materials which undergo coloring by oxidation, and in this case a typical reduction-coloring material, $WO_3$, is used. $WO_3$ turns blue when, for example, cations with a small ionic radius such as $H^+$, $Li^+$, etc. are introduced from the electrolyte and electrons from the power source. In an

example in which a proton acid and a lithium salt are used as the electrolytes, the reactions which take place are represented by, respectively,

$WO_3$ (colorless) + $xH^+$ + $xe^-$ = $H_xWO_3$ (blue)
$WO_3$ (colorless) + $xLi^+$ + $xe^-$ = $Li_xWO_3$ (blue)

These reactions are reversible, but when the power source circuit is opened with $H_xWO_3$ or $Li_xWO_3$, the blue color (reduced state) is maintained for a long time. Other such reduction coloring agents which may be used include, in addition to $WO_3$ mentioned above, $MoO_3$, Mo/$WO_3$, $MoS_3$, $V_2O_5$, $MgWO_4$, $TiO_2$, $W_4O_6$-$(C_2O_4)x$, etc.

The EC layer 5 has a thickness of about 500-1500 Å, and it is formed on the transparent conductive film 6. The transparent conductive film 6 is a collector electrode which is usually formed of indium tin oxide, tin oxide or the like, and its thickness is generally about 1000-5000 Å. This transparent conductive film 6 is formed on the transparent substrate 7, which must be transparent for the reflective mode.

A voltage is applied between the EC electrode made of the EC layer 5 and the transparent conductive film and the counter electrode 2, and the negative voltage applied for reduction of the $WO_3$ may usually be about 1.3-1.9 V.

An electrochromic device according to the present invention may be applied not only to the reflection-type display device in Fig. 1, but also to transmitting-type dimming devices, etc.

Fig. 2 is a sectional view of an example of an EC device according to the present invention which is used as a transmitting-type dimming device, and it shows a construction with successive lamination on a transparent substrate 11 of a transparent conductive film 12 constituting an EC electrode II, an EC layer 13, a polymeric electrode film 14, an EC layer 15 constituting an EC electrode I, a transparent conductive film 16 and a transparent substrate 17.

In this case, if a reduction-coloring EC material is used for the EC layer 15 and an oxidation-coloring EC material is used for the EC layer 13, then an Et element with a high coloring efficiency may be obtained. Furthermore, $WO_3$ in different crystalline states may be used for the Et layer 13, and $IrO_x$, $NiO_x$, $CoO_x$, Prussian blue, polyaniline, etc. may also be used.

The structure in Fig. 2 differs from the one in Fig. 1 above in that the EC layer 13 employs, as mentioned above, $IrO_x$ or $WO_3$ in a different crystalline state, it is formed to a thickness of 500-1500 Å, and the EC layer 13 and the transparent conductive layer 12 (EC electrode II) are light-transmitting. In the construction in Fig. 1, the background plate 3 is non-light-transmitting, and the counter electrode 2 may be either non-light-transmitting or light-transmitting.

In the construction in Fig. 2, a voltage is applied between the two electrodes to color the EC layer 15 and the EC layer 13, and this EC device functions as a dimmer glass (EC window). In this construction, if the EC layer 15 (or EC layer 13) is patterned, it may also be used as a transmitting-type display element.

In addition, if the EC element according to the present invention is used as a anti-glare mirror, the background plate 3 and counter electrode 2 in Fig. 1 may be made of a reflective material, for example aluminum or the like.

If a viologen derivative is used, a transparent conductive electrode (ITO, etc.) and a counter electrode are employed, and the counter electrode may be an oxidation-coloring electrode such as NiO, $IrO_x$, Prussian blue, etc., or a substance which is colorless in both oxidation and reduction reactions. Also, when the viologen derivative receives electrons from the ITO electrode it is reduced and colored. If an excessively high voltage is applied at this time the ITO is reduced, and therefore 1 V or less is preferred.

## EXAMPLES

(1) Solvent (i)

Production Example 1 (Production of polymeric porous thin-film)

To 100 parts by weight of a mixed solution of liquid paraffin (64 cst/40 °C) containing 4.0 wt% of polyethylene with a weight average molecular weight (Mw) of $2 \times 10^6$, were added as antioxidants 0.125 parts by weight of 2,6-di-t-butyl-p-cresol and 0.25 parts by weight of methane tetrakis (methylene-3-(3,5-di-t-butyl-4-hydroxyphenyl)-propionate), and the components were mixed. This mixed solution was loaded into a stirrer-equipped autoclave, heated to 200 °C and then stirred for 90 minutes to make a uniform solution.

The solution was filled into a heated metal mold and then rapidly cooled to 50 °C to obtain a gelatinous sheet. The gelatinous sheet was immersed in methylene chloride for 60 minutes and then pasted onto a

smooth hoard and the methylene chloride was evaporated off to dryness to obtain master roll sheets. Each of the obtained master roll sheets was simultaneously subjected to biaxial drawing at a temperature of 115-130 °C, and when the resulting drawn film was washed with methylene chloride to extract and remove the residual liquid paraffin, a dried porous thin-film was obtained.

The polyethylene porous thin-film had a film thickness of 20 µm, a porosity rate of 60%, an average pore size of 200 Å and a refractive index of 1.540.

Example 1

In mixed solvents containing 2,2-diphenylpropionitrile/ N-methylpyrrolidone (NMP) at various weight ratios was dissolved lithium perchlorate to a concentration of 5 wt% in the solutions, to prepare ionic conductors.

The refractive indexes of the ionic conductors were as shown in Fig. 3.

Next, the ionic conductors were impregnated into the type of porous thin-film obtained in Production Example 1 to prepare polymer electrolytic thin-films, and the haze factor (%) thereof was measured. The results were as shown in Fig. 3.

From Fig. 3 it may be seen that this type of mixed solvent system may be given a refractive index of 1.48-1.56, particularly 1.51-1.55, and the haze factor may also be reduced to 2% or lower, by adjustment of the mixing ratio.

Next, Fig. 4 shows the results of measurement of the ionic conductivity of the polymeric porous thin-films at room temperature and before and after heat treatment at 80 °C for 50 hours. It was found that a sufficiently high ionic conductivity of $10^{-5}$ $Scm^{-1}$ or greater could be obtained at room temperature, and that even after heat treatment the heat resistance was excellent with no lowering of the ionic conductivity.

Fig. 5 further shows the results of measurement of the ionic conductivity of an electrolyte solution of DPPN/NMP = 70/30 upon variation of the temperature. Even at -20 °C an excellent ionic conductivity of $10^{-5}$ $Scm^{-1}$ or greater was obtained.

In addition, this electrolytic thin-film was used to prepare an electrochromic device according to the construction shown in Fig. 1. $WO_3$ was used as the EC electrode and NiO was used as the counter electrode. Then a cycle, in which a voltage of 1.5 V was applied between the two electrodes of the EC element for 5 seconds and then the voltage was returned to 0 V and left for 5 seconds, was repeated to determine the repeatability, colorability and decolorability.

As a result, it was possible to obtain a deep coloration and a satisfactory decoloration, and even upon repetition there was no deterioration of the colorability or decolorability.

Even in the long-term thermal stability test, no escape of the solvent from the electrolytic film was observed.

Example 2

The procedure in Example 1 was repeated, using 2-pyrrolidone in place of the N-methylpyrrolidone in Example 1.

The results are shown in Figs. 5-7. The same excellent results as in Example 1 were obtained, including the cycle test.

Example 3

The NMP (N-methylpyrrolidone) in Example 1 was replaced with 1,3-dimethyl-2-imidazolizinone (refractive index $n_D^{20}$: 1.471 DMI) to make a mixed solvent of DPPN/DMI = 65/35, and the concentration of lithium perchlorate in the electrolyte solution was adjusted to 5 wt%.

The electrolyte solution had a refractive index of 1.541, an ionic conductivity of $120 \times 10^{-5}$ $Scm^{-1}$ at 20 °C and $23 \times 10^{-5}$ $Scm^{-1}$ at -20 °C, thus exhibiting a high ionic conductivity even at a low temperature.

Next, the electrolyte solution was impregnated into the polyethylene porous film obtained in Production Example 1 in the same manner as in Example 1 to prepare an electrolytic film. This electrolytic film was found to have excellent transparency and ionic conductivity, with a haze factor of 1.0% and an ionic conductivity of $27 \times 10^{-5}$ $Scm^{-1}$ (20 °C).

Furthermore, when the electrolytic film was subjected to heat treatment at 80 °C for 50 hours, it was found to have a haze factor of 1.9%, an ionic conductivity of $25 \times 10^{-5}$ $Scm^{-1}$ and a weight loss ratio of 1% or lower, with no coloration or other changes in the color phase, and with a thermal stability which was excellent even in comparison with Examples 1 and 2.

This electrolytic film was used to prepare an EC element in the same manner as in Example 1, and a cycle test was performed to determine the EC properties thereof, yielding a satisfactory colorability and decolorability.

Reference Example 1

Tetraethylene glycol dimethyl ether (refractive index: 1.420) was used in place of the NMP in Example 1, at a ratio of DPPN/tetraethylene glycol dimethyl ether = 80/20 (weight ratio), and the procedure in Example 1 was repeated. As a result, the obtained electrolytic film exhibited excellent transparency and thermal stability and a high ionic conductivity. An EC element using this electrolytic film exhibited satisfactory colorability and decolorability even in the same cycle test as in Example 1.

Comparison 1

Lithium perchlorate was dissolved in tetraethylene glycol dimethyl ether to a concentration of 15 wt%, to prepare an electrolyte solution. This was impregnated into the porous thin-film obtained in Production Example 1 to prepare a polymer electrolytic film. The obtained electrolytic film was grayish white and opaque, and an EC element employing it also had insufficient colorability, with noticeable residual color after the cycle test, showing poor decolorability.

The above results are summarized in Table 1.

Table 1

| Specimen | Example 1 | Example 2 | Example 3 | Reference Example 1 | Comparison 1 |
|---|---|---|---|---|---|
| Electrolyte solution composition (weight ratio) | DPPN(70)*1 N-methylpyrrolidone (30) | DPPN (57) 2-pyrrolidone (43) | DPPM (65) DMI (35)*3 | DPPN (80) TEG (20)*2 | -- TEG (100) |
| Electrolyte, $LiClO_4$ (wt%) | 5 | 5 | 5 | 5 | 15 |
| Electrolyte solution Refractive index $n_D^{20}$ | 1.544 | 1.536 | 1.541 | 1.541 | 1.430 |
| Ionic conductivity ($Scm^{-1}$, -20°C) | $1.5\times10^{-5}$ | $1.7\times10^{-6}$ | $1.2\times10^{-3}$ | $2.1\times10^{-6}$ | $1.0\times10^{-4}$ |
| Electrolytic film haze factor (%) | 1.8 | 1.6 | 1.8 | 1.8 | 35 |
| Ionic conductivity ($Scm^{-1}$) | $7.6\times10^{-5}$ | $3.8\times10^{-5}$ | $27\times10^{-5}$ | $2.3\times10^{-5}$ | $2.0\times10^{-4}$ |
| Thermal stability (80°C, 50 hr)*4 | Good | Good | Good | Good | Good |
| Color phase | Colorless | Colorless | Colorless | Colorless | Grayish white |
| EC properties ($10^4$ cycle test) Colorability (clarity, color shading) | Good | Good | Good | Good | Poor |
| Decolorability (residual color, color shading) | Good | Good | Good | Good | Poor |

*1) DPPN 2,2-diphenylpropionitrile
*2) TEG Tetraethylene glycol dimethyl ether
*3) DMI 1,3-dimethyl-2-imidazolizinone
*4) Evaluation of thermal stability Changes in ionic conductivity and weight (volatility of solvent)

(2) Solvent (ii)

Example 4

In mixed solvents containing dibenzyl ketone/N-methylpyrolidone at various weight ratios was dissolved lithium perchlorate to a concentration of 5 wt% in the solutions, to prepare ionic conductors.

The refractive indexes of the ionic conductors were as shown in Fig. 8.

Next, the ionic conductors were impregnated into the type of porous thin-film obtained in Production Example 1 to prepare polymer electrolytic thin-films, and the haze factors (%) thereof were measured. The results were as shown in Fig. 8.

From Fig. 8 it may be seen that this type of mixed solvent system may be given a refractive index of 1.48-1.56, particularly 1.51-1.56, and the haze factor may also be reduced to 2% or lower, by adjustment of the mixing ratio.

Next, Fig. 9 shows the results of measurement of the ionic conductivity of the polymeric porous thin-films at room temperature and before and after heat treatment at 80°C for 50 hours. It was found that a sufficiently high ionic conductivity of $10^{-5}$ $Scm^{-1}$ or greater could be obtained at room temperature, and that even after heat treatment the heat resistance was excellent with no lowering of the ionic conductivity.

Fig. 10 further shows the results of measurement of the ionic conductivity of an electrolyte solution of DBK/NMP = 65/35 upon variation of the temperature. Even at -20°C an excellent ionic conductivity of $10^{-5}$ $Scm^{-1}$ or greater was obtained.

In addition, this electrolytic thin-film was used to prepare an electrochromic element according to the construction shown in Fig. 1. $WO_3$ was used as the EC electrode and NiO was used as the counter electrode. Then a cycle in which a voltage of 1.5 V was applied between the two electrodes of the EC element for 5 seconds and then the voltage was returned to 0 V and left for 5 seconds, was repeated to determine the repeatability, colorability arid decolorability.

As a result, it was possible to obtain a satisfactory coloration and decoloration, and even upon repetition there was no deterioration of the colorability or decolorability.

Even in the long-term thermal stability test, no escape of the solvent from the electrolytic film was observed.

Example 5

2-pyrrolidone was used in place of the N-methylpyrrolidone in Example 4, and the procedure in Example 4 was repeated.

The same excellent results as in Example 4 were obtained, including the cycle test.

Example 6

Tetraethylene glycol dimethyl ether (refractive index: 1.420) was used in place of the NMP in Example 4, and the procedure in Example 4 was repeated.

As a result, an EC element employing the obtained electrolytic film exhibited excellent properties.

The above results are summarized in Table 2.

Table 2

| Specimen | Example 4 | Example 5 | Example 6 | Comparison 1 |
|---|---|---|---|---|
| Electrolyte solution composition (weight ratio) | DBK(65) N-methylpyrrolidone (35) | DBK (60) 2-pyrrolidone (30) | DBK (80) TEG (20)*1 | -- TEG (100) |
| Electrolyte, $LiClO_4$ (wt%) | 5 | 5 | 5 | 15 |
| Electrolyte solution Refractive index $n_D^{20}$ | 1.537 | 1.540 | 1.542 | 1.430 |
| Ionic conductivity ($Scm^{-1}$, -20°C) | $8.9\times10^{-5}$ | $2.0\times10^{-5}$ | $1.1\times10^{-5}$ | $1.0\times10^{-4}$ |
| Electrolytic film haze factor (%) | 1.4 | 1.4 | 2.1 | 35 |
| Ionic conductivity ($Scm^{-1}$) | $1.4\times10^{-4}$ | $1.1\times10^{-4}$ | $5.3\times10^{-5}$ | $2.0\times10^{-4}$ |
| Thermal stability (80°C, 50 hr)*2 | Good | Good | Good | Good |
| Color phase | Colorless | Colorless | Colorless | Grayish white |
| EC properties ($10^4$ cycle test) Colorability (clarity, color shading) | Good | Good | Good | Poor |
| Decolorability (residual color) | Good | Good | Good | Poor |

*1) Tetraethylene glycol dimethyl ether
*2) Changes in ionic conductivity and weight (volatility of solvent)

(3) Solvent (iii)

Example 7

In a mixed solvent containing 2,2-diphenylpropionitrile (DPPN)/dibenzyl ketone (DBK)/N-methylpyrrolidone (weight ratio: 35/35/30) was dissolved lithium perchlorate to a concentration of 5 wt%, to prepare an electrolyte solution. The refractive index and ionic conductivity at -20 °C of the electrolyte solution were determined, and the results are shown in Table 3.

This ionic conductor was impregnated into the porous thin-film obtained in Production Example 1 and fixed in the pores of the film to prepare a polymer electrolytic film. The haze factor and ionic conductivity at room temperature of the electrolytic film were measured, and the color phase thereof was determined visually. Also, the ionic conductivity and weight change of the electrolytic film after heat treatment at an increased temperature of 80 °C for 50 hours was measured to determine the thermal stability. The results were as shown in Table 3.

From Table 3 it may be seen that the refractive index of the electrolyte solution was 1.542, or very close to that of the polymer film, and the obtained electrolytic film was colorless and had an excellent transparency demonstrated by a haze factor of lower than 2%. Furthermore, it is shown that the electrolytic film had a high ionic conductivity of over $10^{-5}$ $Scm^{-1}$ at room temperature, and that even after high-temperature heat treatment at 80 °C there was no escape of the solvent and the thermal stability was excellent with no lowering of the ionic conductivity.

On the other hand, it is clear that the electrolyte solution exhibited an ionic conductivity of over $10^{-5}$ $Scm^{-1}$ even at -20 °C, and that an electrolyte solution prepared using this mixed solvent also has excellent low-temperature properties.

In addition, this electrolytic thin-film was used to prepare an electrochromic element according to the construction shown in Fig. 1. $WO_3$ was used as the EC electrode and NiO was used as the counter electrode. Then a cycle in which a voltage of 1.5 V was applied between the two electrodes of the EC element for 5 seconds and then the voltage was returned to 0 V and left for 5 seconds, was repeated to determine the repeatability, colorability and decolorability.

As a result, it was possible to obtain a deep coloration and a satisfactory decoloration, and even upon repetition there was no deterioration of the colorability or decolorability.

Example 8

The procedure in Example 7 was repeated, using 2-pyrrolidone in place of the N-methylpyrrolidone in Example 7, for a mixed solvent of DPPN/DBK/2-pyrrolidone (weight ratio: 30/30/40). The resulting electrolytic film and electrochromic element exhibited excellent properties as in Example 7.

Example 9

Tetraethylene glycol dimethyl ether (TEG) was used in place of the N-methylpyrrolidone in Example 7, for a mixed solvent of DPPN/DBK/TEG (weight ratio: 40/40/20), and the procedure in Example 1 was repeated. The electrolytic film obtained in the same manner as in Example 1 had excellent transparency, and the electrochromic device exhibited excellent properties.

The above results are summarized in Table 3.

Table 3

| Specimen | Example 7 | Example 8 | Example 9 | Comparison 1 |
|---|---|---|---|---|
| Electrolyte solution composition (weight ratio) | DPPN (*1) (35) DBK (*2) (35) N-methylpyrrolidone (30) | DPPN (30) DBK (30) 2-pyrrolidone (40) | DPPN (40) DBK (40) TEG (*3) (20) | -- -- TEG (100) |
| Electrolyte, $LiClO_4$ (wt%) | 5 | 5 | 5 | 15 |
| Electrolyte solution Refractive index $n_D^{20}$ | 1.542 | 1.540 | 1.541 | 1.430 |
| Ionic conductivity ($Scm^{-1}$, -20°C) | $6.3\times10^{-5}$ | $7.0\times10^{-6}$ | $2.0\times10^{-6}$ | $1.0\times10^{-4}$ |
| Electrolytic film haze factor (%) | 1.6 | 1.4 | 1.9 | 35 |
| Ionic conductivity ($Scm^{-1}$) | $9.5\times10^{-5}$ | $7.2\times10^{-5}$ | $4.0\times10^{-5}$ | $2.0\times10^{-4}$ |
| Thermal stability (80°C, 50 hr)*4 | Good | Good | Good | Good |
| Color phase | Colorless | Colorless | Colorless | Grayish white |
| EC properties ($10^4$ cycle test) Colorability (clarity, color shading) | Good | Good | Good | Poor |
| Decolorability (residual color) | Good | Good | Good | Poor |

*1) 2,2-diphenylpropionitrile
*2) Dibenzyl ketone
*3) Tetraethylene glycol dimethyl ether
*4) Changes in ionic conductivity and weight (volatility of solvent)

(4) Solvent (iv)

Example 10

In mixed solvents containing DMI/benzoacetonitrile (BAN) at various weight ratios was dissolved lithium perchlorate to a concentration of 5 wt% in the solutions, to prepare ionic conductors.

The refractive indexes of the ionic conductors were as shown in Table 4.

Table 4

| Refractive indexes of DMI/BAN mixture systems | | |
|---|---|---|
| BAN/DMI mixing ratio | Refractive index (20 ° C) | Refractive index (25 ° C) |
| 100: 0 | 1.5231 | 1.5244 |
| 75: 25 | 1.5108 | 1.5121 |
| 50: 50 | 1.4931 | 1.4943 |
| 0:100 | 1.4710 | 1.4688 |

Next, the ion conductors were impregnated into the type of porous thin-film obtained in Product Example 1 to prepare polymer electrolytic thin-films.

From Fig. 4 it may be seen that this type of mixed solvent system may be given a refractive index of 1.47-1.53 by adjustment of the mixing ratio.

Also, a sufficiently high ionic conductivity of 3.72 $mScm^{-1}$ was obtained as a result of measurement of the ionic conductivity of a polymer electrolytic thin-film (BAM/DMI = 75:25) at room temperature.

In addition, this electrolytic thin-film was used to prepare an electrochromic device according to the construction shown in Fig. 1. $WO_3$ was used as the EC electrode and NiO was used as the counter electrode. Then a cycle in which a voltage of 1.5 V was applied between the two electrodes of the EC device for 5 seconds and then the voltage was returned to 0 v and left for 5 seconds, was repeated to determine the repeatability, colorability and decolorability.

As a result, it was possible to obtain a deep coloration and a satisfactory decoloration, and even upon repetition there was no deterioration of the colorability or decolorability.

Even in the long-term thermal stability test, no escape of the solvent from the electrolytic film was observed.

Example 11

2,2-diphenylpropionitrile (DPPN) was used in place of the BAN in Example 10, and the procedure in Example 10 was repeated.

The results are shown in Table 5. The same excellent results as in Example 1 were obtained.

Table 5

| Refractive indexes of DPPN/DMI mixture systems | | |
|---|---|---|
| DPPN/DMI mixing ratio | Refractive index (20 ° C) | Refractive index (25 ° C) |
| 100: 0 | 1.5715 | 1.5693 |
| 75: 25 | 1.5461 | 1.5440 |
| 50: 50 | 1.5231 | 1.5210 |
| 0:100 | 1.4708 | 1.4687 |

Also, sufficiently high ionic conductivities of over 3.39 $mScm^{-1}$ and 1.02 $mScm^{-1}$, respectively, were obtained as a result of measurement of the ionic conductivity of similar polymer electrolytic thin-films (DPPN/DMI = 65:35 and 35:65) at room temperature.

Example 12

Ethyl benzoate (EB) was used in place of the BAN in Example 10, and the procedure in Example 10 was repeated.

The results are shown in Table 6. The same excellent results as in Example 1 were obtained.

Table 6

| Refractive indexes of EB/DMI mixture systems | | |
|---|---|---|
| EB/DMI mixing ratio | Refractive index (20 °C) | Refractive index (25 °C) |
| 100: 0 | 1.5057 | 1.5070 |
| 75: 25 | 1.4985 | 1.4997 |
| 50: 50 | 1.4871 | 1.4884 |
| 0:100 | 1.4710 | 1.4688 |

Also, a sufficiently high ionic conductivity of over 1.0 $mScm^{-1}$ was obtained as a result of measurement of the ionic conductivity of a similar polymer electrolytic thin-film (EB/DMI = 50:50) at room temperature.

Example 13

Benzosuberone and benzoacetonitrile were used in place of the BAN in Example 10, 3 wt% of lithium perchlorate was added thereto to prepare an electrolyte with the composition listed below, and the procedure in Example 10 was repeated. However, the ionic conductivity was measured at 0 °C and -20 °C in addition to normal temperature (20 °C).

Table 7

| | Composition 1 | Composition 2 | Composition 3 |
|---|---|---|---|
| DMI | 4.0 g | 4.0 g | 4.0 g |
| Benzosuberone | 1.4 g | 2.0 g | 3.0 g |
| Benzoacetonitrile | 0.2 g | 0.2 g | 0.2 g |
| Lithium perchlorate | 0.167 g | 0.185 g | 0.216 g |

The results are shown in Tables 8 and 9. The same excellent results as in Example 10 were obtained, and in particular, a sufficiently high ionic conductivity at low temperatures was observed. The measurement was performed by the complex impedance method (frequency: 0.01 Hz - 100 kHz) using a platinum electrode.

Table 8

| Ionic conductivity [$mScm^{-1}$] | | | |
|---|---|---|---|
| Composition | Normal temperature | 0 °C | -20 °C |
| 1 | 2.43 | 1.37 | 0.63 |
| 2 | 2.02 | 1.33 | 0.75 |
| 3 | 1.54 | 0.69 | 0.34 |

Table 9

| Refractive index | | |
|---|---|---|
| Composition | Refractive index (20 °C) | Refractive index (25 °C) |
| 1 | 1.5135 | 1.5149 |
| 2 | 1.5250 | 1.5264 |
| 3 | 1.5440 | 1.5452 |

(5) Solvent (v)

Example 14

(Production of electrochromic device)

A 100 mm square, 1.1 mm thick non-alkali glass piece with a 1600 Å ITO (indium oxide/tin oxide) film formed thereon by ion plating was spin coated with a 0.9 mol/kg toluene solution containing the nickel alkoxide $Ni(OC_2H_4OEt)_2$, at a primary rotation speed of 700 rpm and a secondary rotation speed of 1600 rpm, and after heating to 350 °C at a temperature-elevating rate of 1 °C/min, the temperature was maintained for 3 minutes and then lowered by 1 °C/min to obtain a nickel oxide electrochromic electrode with a thickness of 3500 Å.

A 100 mm square, 1.1 mm thick non-alkali glass piece with a 1600 Å ITO film formed thereon by ion plating was ion plated with tungsten oxide (high-purity chemical product) to a thickness of 3600 Å, to obtain a tungsten oxide electrode.

A 25 µm thick polyethylene fine porous film (porosity rate 56%) obtained by biaxial expansion was vacuum impregnated with an electrolyte solution comprising 38 wt% DL-2-phenylbutyronitrile, 38 wt% 2,2-diphenylpropionitrile, 19 wt% polyethylene glycol dimethyl ether and 5 wt% lithium perchlorate (electrolyte solution A) to prepare a solid polymer electrolytic thin-film.

The above solid polymer electrolytic thin-film was sandwiched between electrode I and electrode II and sealed with an epoxy adhesive to prepare an electrochromic element.

A step cycle which involved applying a Step voltage of -1.2 V and +1.2 V (every 10 seconds) between the tungsten oxide electrode and the nickel oxide was performed 100 times, and the measured introduction charge was 2.7 mC/cm.

Furthermore, a bipolar cyclic voltammogram of the electrochromic element was measured at a voltage of - 1.2 V and +1.2 V (every 20 seconds) and as a result a maximum current of 567 µA was obtained for the decolored side, while a current introduced by applying 0.2 V at the nickel oxide side was completely dischargeable.

(Measurement of properties of electrolyte solution)

The refractive index and ionic conductivity were determined for an electrolyte solution having the same composition as above, i.e. 38 wt% DL-2-phenylbutyronitrile, 38 wt% 2,2-diphenylpropionitrile, 19 wt% polyethylene glycol dimethyl ether and 5 wt% lithium perchlorate (electrolyte solution A) and an electrolyte solution comprising 28 wt% DL-2-phenylbutyronitrile, 48 wt% 2,2-diphenylpropionitrile, 19 wt% polyethylene glycol dimethyl ether and 5 wt% lithium perchlorate (electrolyte solution B).

The measurement of the ionic conductivity was according to the complex impedance method (sweep frequency: 0.01 Hz - 100 kHz) and evaluated by a Cole-Cole plot using a conductivity cell consisting of 2 parallel platinum black electrodes.

The results are shown in Table 10. The level of ionic conductivity was 4-6 x $10^{-4}$ S/cm.

Table 10

| | Conductivity | Ionic conductivity |
|---|---|---|
| Electrolyte solution A<br>Electrolyte solution B | 1.5309<br>1.5230 | 0.45 mS/cm<br>0.56 mS/cm |

(Measurement of transparency)

Two glass plates (thickness: 1.1 mm) were layered, and measurement of the light transmittance and haze factor gave values of 92.60% and 1.17%, respectively.

An electrolyte solution with the same composition as above was impregnated into the pores of a polyethylene fine porous thin-film (porosity rate: 54%, thickness: 25 µm) to prepare a solid polymer electrolytic film which was then inserted between the above mentioned glass plates, and the transmittance and haze factor were measured and found to be 92.11% and 2.83%, respectively.

Example 15

In the same manner as in Example 14 there was prepared an electrolyte solution comprising 57 wt% 4-phenylbutyronitrile, 19 wt% 2,2-diphenylpropionitrile, 19 wt% polyethylene glycol dimethyl ether (molecular weight: 250) and 5 wt% lithium perchlorate, and the refractive index and ionic conductance were measured. The results were as shown below.

| | |
|---|---|
| Refractive index (20 ° C)<br>Refractive index (25 ° C)<br>Ionic conductance | 1.5143<br>1.5166<br>1.17 mS/cm |

Example 16

In the same manner as in Example 14, there was prepared an electrolyte solution comprising 85.5 wt% 4-phenylbutyronitrile, 9.5 wt% polyethylene glycol methyl ether and 5 wt% lithium perchlorate, and the refractive index and ionic conductance were measured. The results were as shown below.

| | |
|---|---|
| Refractive index (20 ° C)<br>Refractive index (25 ° C)<br>Ionic conductivity | 1.5088<br>1.5103<br>0.99 mS/cm |

(6) Solvent (vi)

Example 17

(Solvent properties)

The alkali metal salt lithium perchlorate was added in an amount of 5 wt% to 1-phenyl-1-cyclopropane carbonitrile (compound A), DL-2-phenylbutyronitrile (compound B) and 4-phenylbutyronitrile (compound C), and the refractive index and ionic conductance of the solutions were measured. The measurement of the ionic conductance was performed using a CM-20S, product of Toa Denpa Co. An tonic conductivity of $10^{-5}$ S/cm or higher is necessary, because if it is lower the response of the element will be slow.

The results are provided in the following table.

| Solvent | Refractive index | | Ionic conductivity A mS/cm | Ionic conductivity B $10^{-5}$ S/cm | haze factor (%) | Transmittance (%) |
|---|---|---|---|---|---|---|
| | 20 ° C | 25 ° C | | | | |
| Compound A | 1.5395 | 1.5408 | 0.45 | 5.14 | 1.3 | 99 |
| Compound B | 1.5101 | 1.5114 | 0.54 | 6.1 | 5.3 | 99 |
| Compound C | 1.5162 | 1.5175 | 0.51 | 5.8 | 4.2 | 99 |

In the above table, ionic conductivity A is the tonic conductivity at 25 ° C, and tonic conductivity B is the ionic conductivity at 25 ° C when used to fill a polymeric porous thin-film.

It is seen that the refractive indexes are close to those of solid polymeric porous films, and that all of the compounds have the sufficiently high ionic conductivity required for electrochromic application. Furthermore, since the refractive indexes are close, elements with a transmittance of 99% or greater, a low haze factor and a very high transparency could be obtained with all of the solutions.

(Production of electrochromic device)

An electrochromic device was prepared in the manner shown in Fig. 11, using a $WO_3$ electrode ($WO_3$, thickness: 4000 Å) prepared by vacuum deposition onto a glass/ITO substrate (thickness; 1.1 mm, 10 cm square), an electrode prepared by spin coating a glass/ITO substrate (thickness: 1.1 mm, 10 cm square) with a 0.927 mol/kg toluene solution containing the Ni alkoxide $Ni(OC_2H_4OEt)_2$ and subjecting it to firing at 70 ° C for 2 hours followed by firing at 400 ° C for 3 hours, and an electrolyte prepared by vacuum impregnating a polyethylene fine porous film (porosity rate: 55%, thickness: 25 $\mu$m) with an electrolyte solution comprising 3 wt% lithium perchlorate dissolved in 1-phenyl-1-cyclopropane carbonitrile.

In Fig. 11, 21 is a glass substrate, 22 is an ITO film, 23 is a $WO_3$ electrode EC (1), 24 is a solid polymer electrolytic film, 25 is a NiO electrode EC (2), 26 is an ITO film, 27 is a glass substrate, 28 is a lithium reference electrode, 29 is stainless steel and 30 is a sealant.

Application of a voltage $\Delta E$

$$\Delta E = V_{EC(1)} - V_{EC(2)} = -1.1 \text{ V}$$

to this electrochromic element causes the reactions

$$WO_3 + xLi^+ + xe^- - LiWO_3$$
$$NiO + OH^- - NiOOH + e^-$$

and coloring occurs.

When a step voltage of -1.0 V, +1.0 VK was applied as shown in Fig. 12A, repeated coloring and decoloring was possible. Fig. 12B shows the current response thereof.

A Coulomb meter was serially connected to the electrochromic element to evaluate the introduction charge, which was found to be 2.9 mC/cm$^2$.

Also, upon decoloration the haze factor was 2.0% and the light transmittance was 78%.

(7) Viologen derivative system

Example 18

An explanation will be given with reference to the drawings, with some repetition of Figs. 1 and 2.

Fig. 13 shows an example of an EC device. This layered construction comprises, from the bottom, a glass plate 41, a counter electrode 42, a background plate 43, a solid electrolytic film 44, a transparent conductive film 45 and a glass plate 46.

Since this display element is in a reflection mode, the glass plate 41 does not necessary need to be transparent, and it may be a resin board. As the counter electrode 42 there may be used an electron-conductive material which has low generation of hydrogen and oxygen, good reversibility of the electrochemical oxidation-reduction reaction, and a large electrical capacity. Such materials include, specifically, carbon and composite materials of transition metal compounds and carbon, etc. The thickness of the

counter electrode 42 may usually be selected in the range of 0.1-10 μm.

The background plate 43 to be used may be a normal white background plate, for example, alumina powder kneaded with a binder to form a sheet. The background plate 43 may also serve as the counter electrode 42.

The solid electrolytic film 44 to be used may be, for example, a polyethylene porous film whose pores are impregnated with an electrolyte solution prepared by dissolving a lithium trifluoromethane sulfonate supporting salt and a viologen compound in polyethylene glycol monoether, and the solid electrolytic film has a thickness of 4-20 μm and an ionic conductivity of $1.5\text{-}2.5 \times 10^{-4}$ S/cm.

The transparent conductive film 45 is a collector electrode which is usually formed of indium/tin oxide (ITO), tin oxide or the like, its thickness is generally about 0.1-0.2 μm, and it is formed on the glass plate 46.

The voltage applied between the transparent conductive film 45 and the counter electrode 42 is 0.5-1 V. It is not preferable to apply a very high voltage at this time, since the ITO will be reduced.

Since the electrolyte is fixed in the polymer film, it may be treated essentially as a solid film, and thus an EC element prepared in this manner has a simple structure and its handling during assembly is facilitated, while even in the event of damage after assembly there is no risk of liquid leakage, and therefore the special considerations taken for liquid electrolytes are not necessary.

By application of a negative voltage from a power source to the transparent conductive film 45, the viologen compound is reduced and produces a color, thus presenting a display.

Fig. 14 shows an example of a transmitting-type dimming device. This layered construction comprises, in order from the bottom, a glass plate 51, a transparent conductive film 52, a counter electrode (display electrode) 53, a solid electrolytic film 54, a transparent conductive film 55 and a glass plate 56.

This construction is characterized in that an oxidation-coloring material such as NiO, $IrO_x$, Prussian blue, polyaniline or the like is used as the counter electrode 53, and thus by applying a voltage between the transparent conductive films 52 and 55 with 55 as the negative voltage, the viologen compound of the electrolyte layer 14 undergoes reduction coloration, making it possible to prepare an EC device with a high coloring efficiency.

The construction in Fig. 14 differs from the one in Fig. 13 in that, as mentioned above, $IrO_x$ or the like is used as the counter electrode 53, and in that light transmittance is achieved with a formed thickness of 0.05-0.2 μm.

In the construction in Fig. 13, the background plate 43 is non-light-transmitting, and the counter electrode 42 may be either non-light-transmitting or light-transmitting. In the construction in Fig. 14, a voltage is applied between the conductive films 52 and 55 with the conductive film 55 as the negative voltage, to provide an effect as a dimming glass (EC window).

Furthermore, if a counter electrode 53 with this construction is patterned, it may be used as a transmitting-type display device as well.

## Claims

**1.** An electrochromic device wherein an electrolyte is situated between the electrochromic electrode and the counter electrode, characterized by employing as said electrolyte an electrolytic thin-film prepared by filling the pores of a polymeric porous thin-film with an ionic conductor, said tonic conductor including, as the solvent, a solvent selected from (i)-(vi) below.

(i) A mixture of (A) 2,2-diphenylpropionitrile and (B) a solvent with a lower refractive index than 2,2-diphenylpropionitrile (excluding polyethers).

(ii) A mixture of (C) dibenzyl ketone and a solvent with a lower refractive index than (C) said dibenzyl ketone.

(iii) A mixture of (A) 2,2-diphenylpropionitrile, (C) dibenzyl ketone and (D) a solvent with a lower refractive index than said polymeric porous thin-film.

(iv) A mixture of (E) 1,3-dimethyl-2-imidazolizinone and (F) a compound with a higher refractive index than 1,3-dimethyl-2-imidazolizinone (excluding 2,2-diphenylpropionitrile).

(v) A mixture of (G) DL-2-phenylbutyronitrile and/or 4-phenylbutyronitrile and (H) polyalkylone glycol or an ether compound thereof.

(vi) At least one aromatic nitrile compound represented by the general formula (I) below.

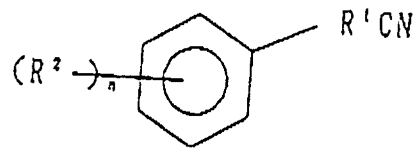

(where $R^1$ is an alkylene, cycloalkylene group or compound group thereof with 2-10 carbon atoms, one of the bonding sites bonding with the benzene ring and the other bonding site bonding with the CN group; $R^2$ is a hydrogen atom, halogen atom or an alkyl or alkoxy group with 1-3 carbon atoms; and m is an integer 1-3).

**2.** An electrochromic device according to Claim 1, wherein the solvent of said ionic conductor is selected from (i) and (iv)-(vi).

**3.** An electrochromic device according to Claim 1, wherein said polymeric porous thin-film has a refractive index of 1.48-1.56.

**4.** An electrochromic device according to Claim 1, wherein the difference between the ionic conductivities of said polymeric porous thin-film and said ionic conductor is 0.005 or less.

**5.** An electrochromic device according to Claim 1, wherein said low-refractive-index solvent (B), (C) or (D) is selected from the group consisting of polyethers, N-methyl pyrrolidone, 2-pyrrolidone, 3-pyrrolidone, dimethyl sulfoxide, dimethylformamide and 2,5-dimethylpyrrole.

**6.** An electrochromic element according to Claim 1, wherein said high-refractive-index solvent (F) is selected from the group consisting of 2-pyrrolidone, 2,5-dimethylpyrrole, 4-phenylbutyronitrile, DL-2-phenylbutyronitrile, 1-phenyl-1-cyclopropane carbonitrile, hydrocinnamonitrile and benzoacetonitrile.

**7.** An electrochromic device according to Claim 1, wherein said aromatic nitrile compound (I) is selected from the group consisting of 1-phenyl-1-cyclopropane carbonitrile, DL-2-phenylbutyronitrile, 4-phenylbutyronitrile, 1-phenyl-1-cyclohexane carbonitrile and hydrocinnamonitrile.

**8.** An electrochromic device according to Claim 1, wherein said solvent (v) further contains (A) 2,2-diphenylpropionitrile.

**9.** An electrochromic device wherein an electrolyte is situated between the electrochromic electrode and the counter electrode, characterized by employing an electrolytic thin-film prepared by filling the pores of a polymeric porous thin-film with a solution of a viologen compound dissolved in a polyethylene oxide-type electrolyte.

**10.** An anti-glare mirror prepared by combining a mirror with an electrochromic device according to any of Claims 1-9.

Fig.1

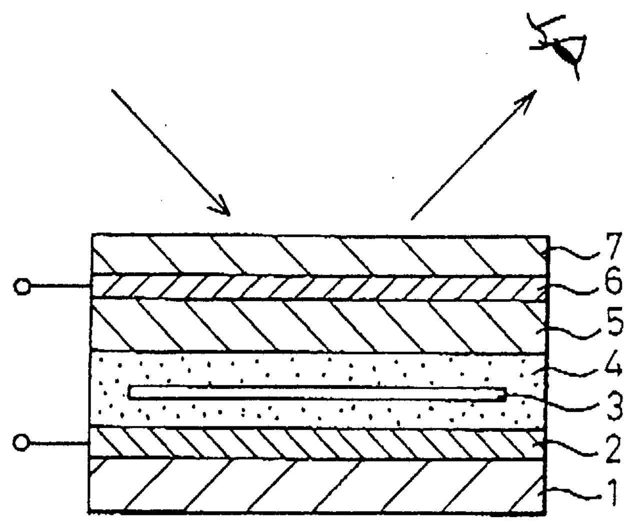


Fig.2

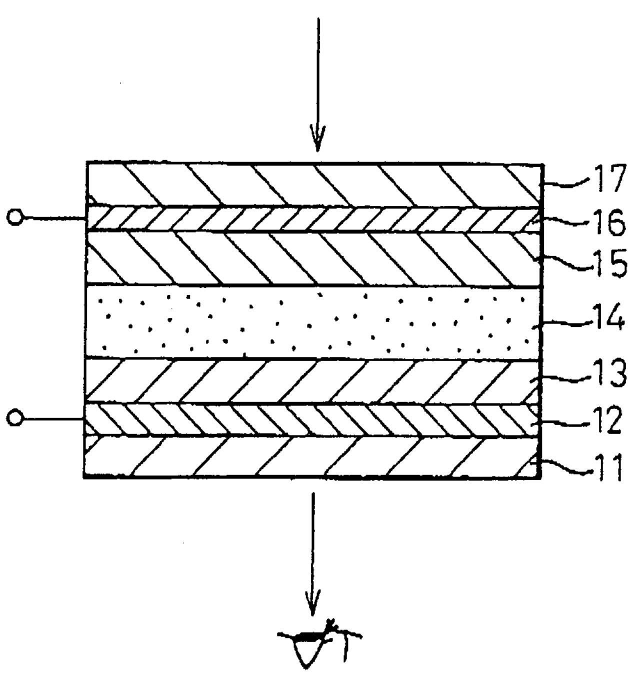

Fig. 3

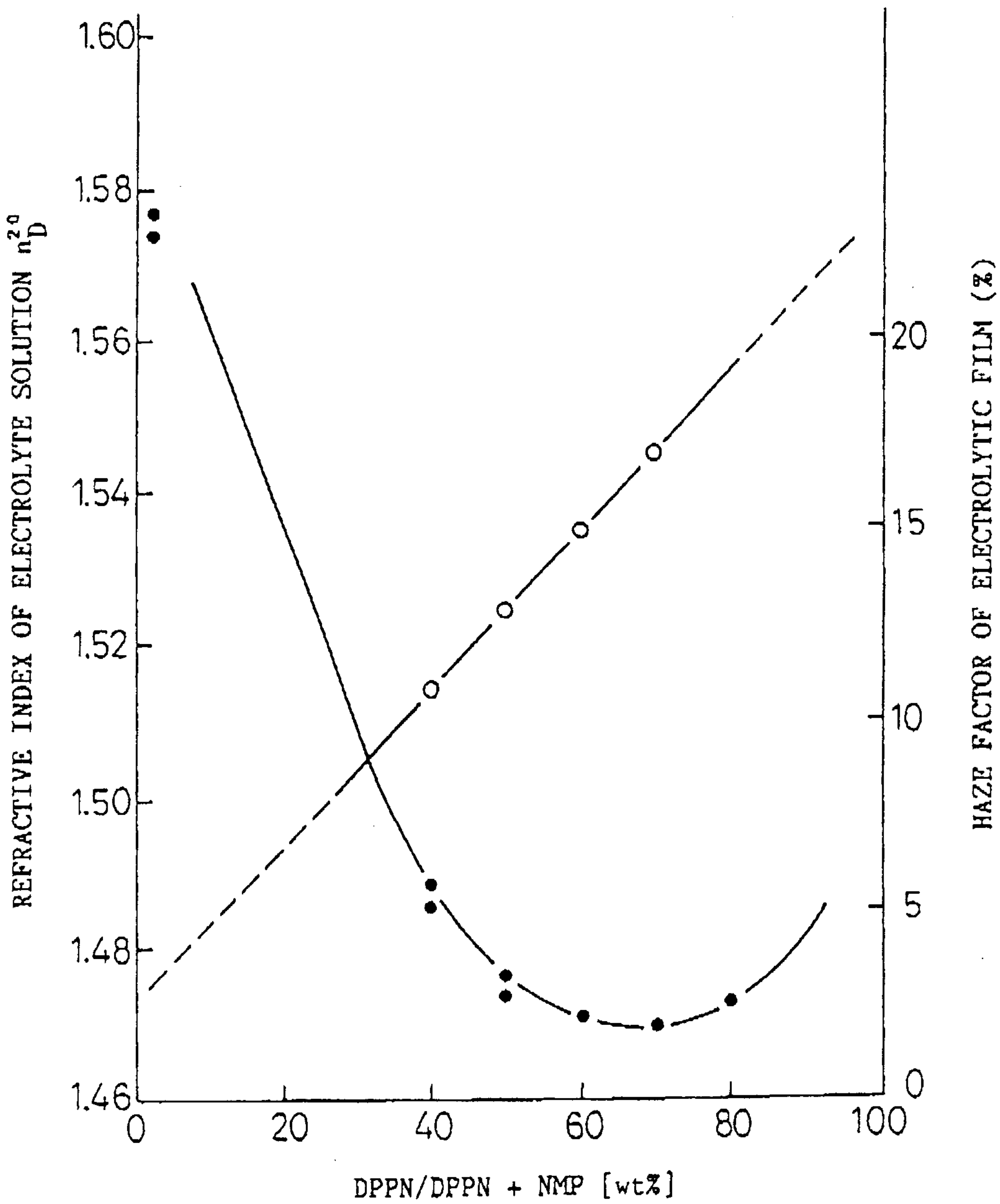
1.60
1.58
1.56
1.54
1.52
1.50
1.48
1.46
REFRACTIVE INDEX OF ELECTROLYTE SOLUTION $n_D^{20}$
20
15
10
5
0
HAZE FACTOR OF ELECTROLYTIC FILM (%)
0
20
40
60
80
100
DPPN/DPPN + NMP [wt%]

Fig. 4

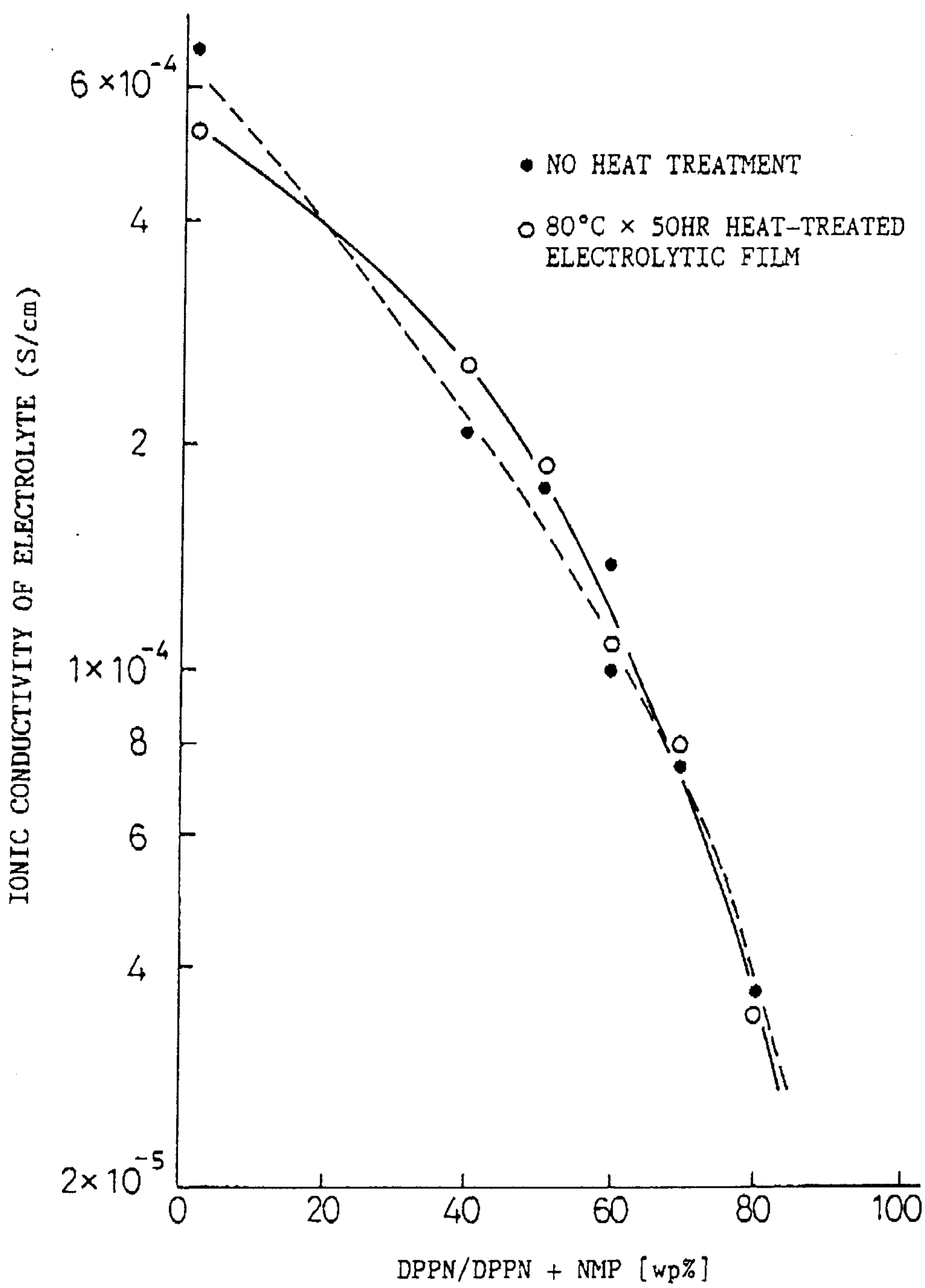
6 ×10⁻⁴
4
2
1×10⁻⁴
8
6
4
2×10⁻⁵
0
20
40
60
80
100
IONIC CONDUCTIVITY OF ELECTROLYTE (S/cm)
DPPN/DPPN + NMP [wp%]
● NO HEAT TREATMENT
○ 80°C × 50HR HEAT-TREATED ELECTROLYTIC FILM

Fig.5

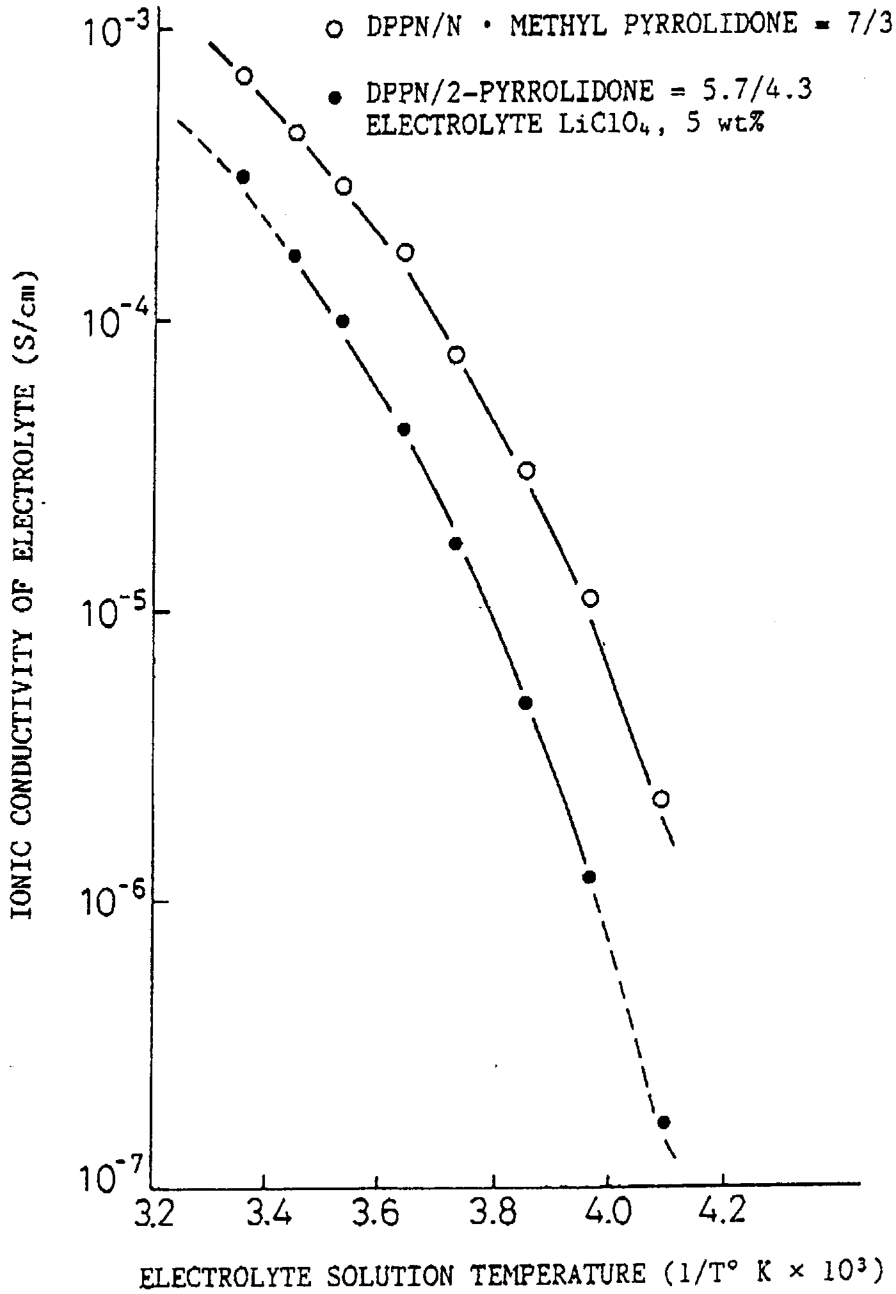
○ DPPN/N · METHYL PYRROLIDONE = 7/3
● DPPN/2-PYRROLIDONE = 5.7/4.3
ELECTROLYTE LiClO4, 5 wt%
IONIC CONDUCTIVITY OF ELECTROLYTE (S/cm)
10-3
10-4
10-5
10-6
10-7
3.2
3.4
3.6
3.8
4.0
4.2
ELECTROLYTE SOLUTION TEMPERATURE (1/T° K × 10³)

Fig.6

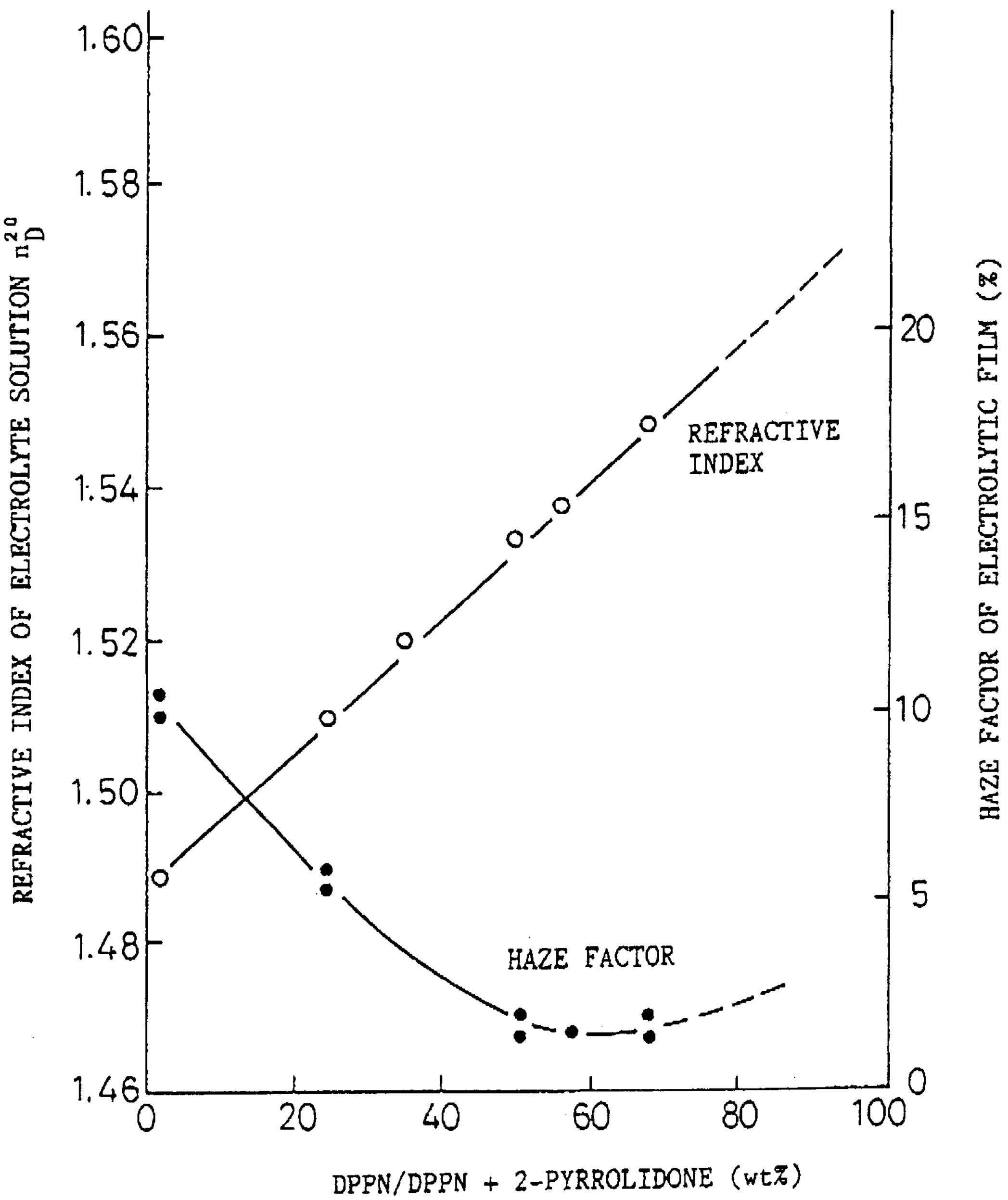
1.60
1.58
1.56
1.54
1.52
1.50
1.48
1.46
REFRACTIVE INDEX OF ELECTROLYTE SOLUTION $n_D^{20}$
20
15
10
5
0
HAZE FACTOR OF ELECTROLYTIC FILM (%)
REFRACTIVE INDEX
HAZE FACTOR
0
20
40
60
80
100
DPPN/DPPN + 2-PYRROLIDONE (wt%)

Fig.7

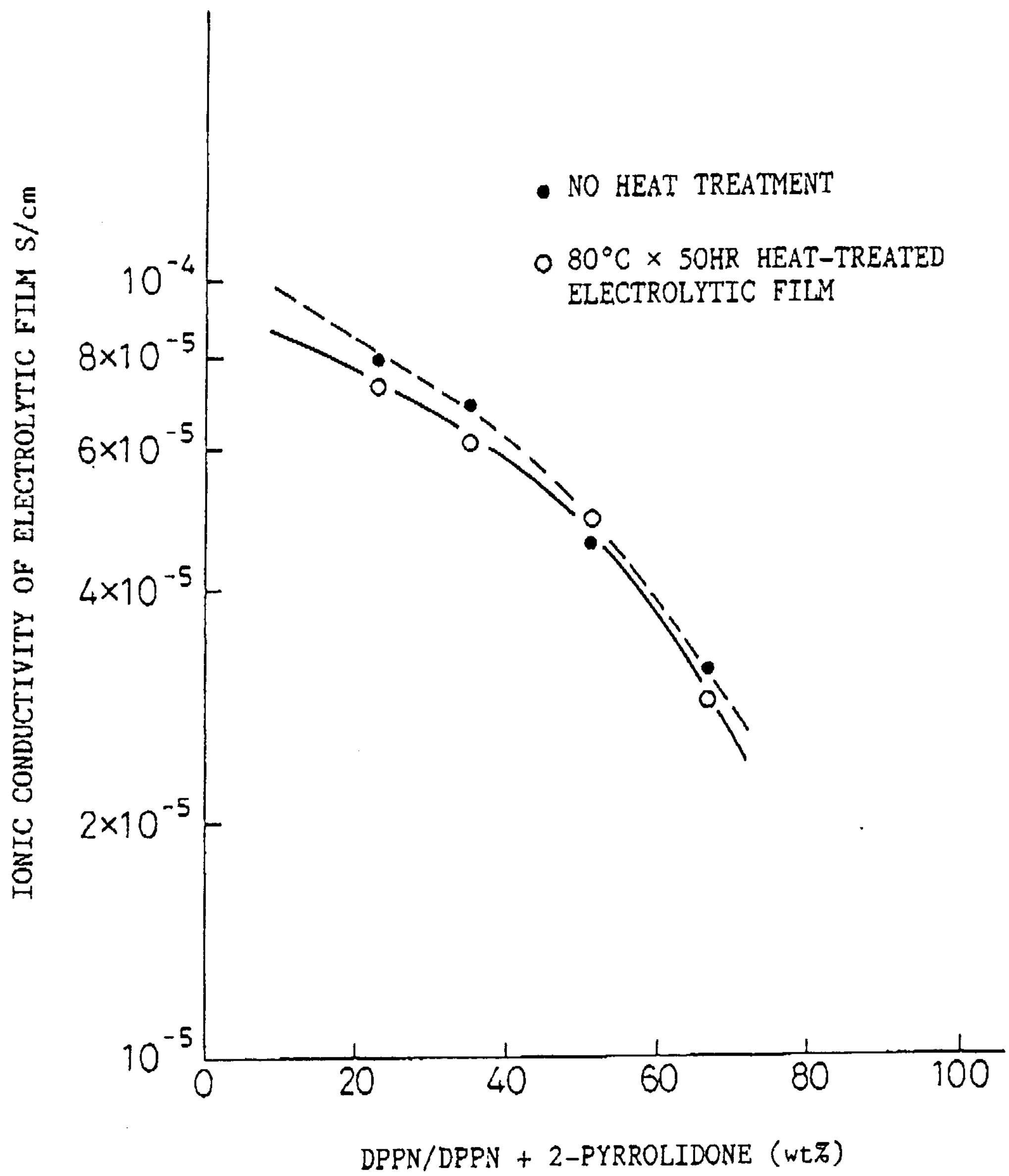
● NO HEAT TREATMENT
○ 80°C × 50HR HEAT-TREATED ELECTROLYTIC FILM
IONIC CONDUCTIVITY OF ELECTROLYTIC FILM S/cm
10^-4
8×10^-5
6×10^-5
4×10^-5
2×10^-5
10^-5
0
20
40
60
80
100
DPPN/DPPN + 2-PYRROLIDONE (wt%)

Fig.8

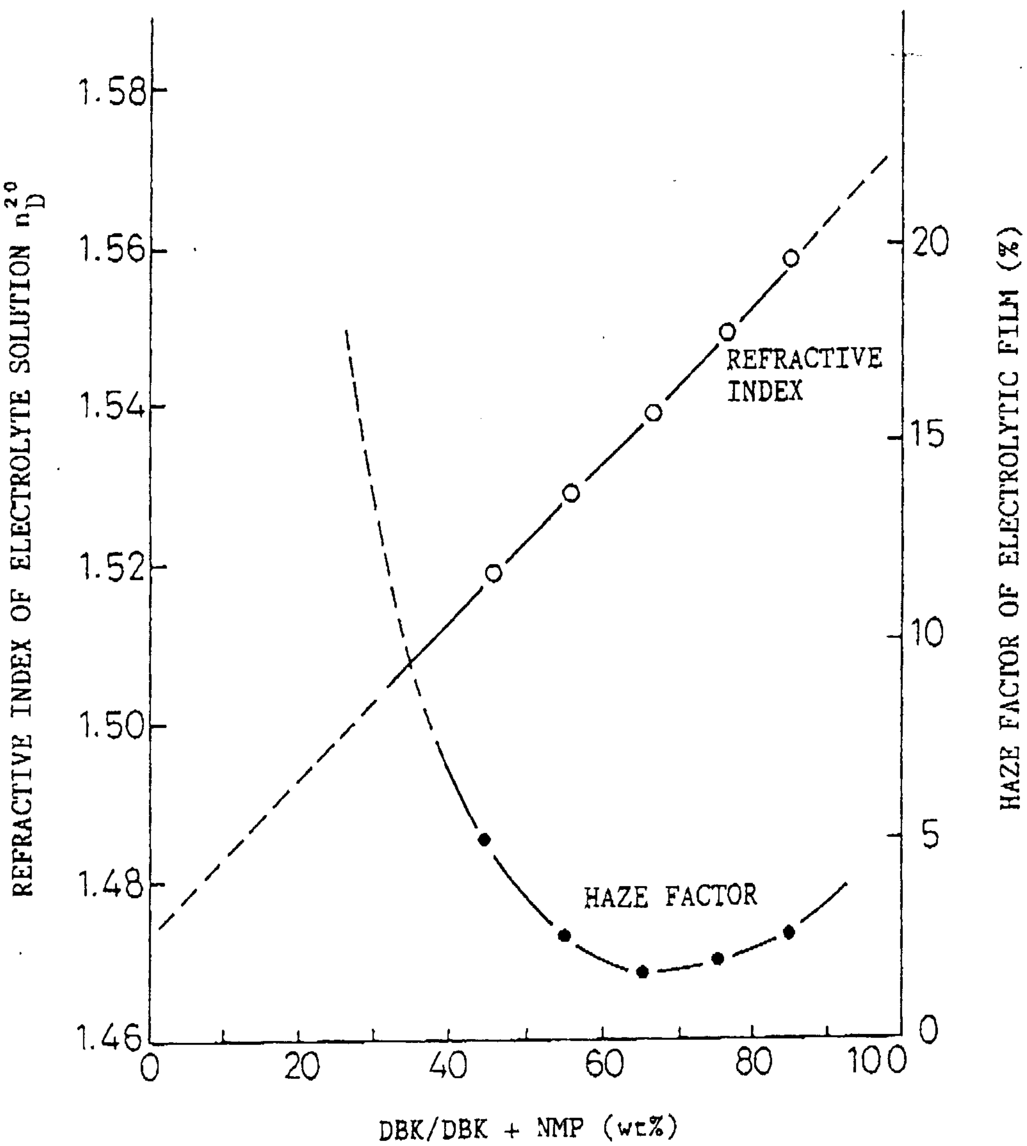
REFRACTIVE INDEX OF ELECTROLYTE SOLUTION $n_D^{20}$
1.58
1.56
1.54
1.52
1.50
1.48
1.46
HAZE FACTOR OF ELECTROLYTIC FILM (%)
20
15
10
5
0
REFRACTIVE INDEX
HAZE FACTOR
0
20
40
60
80
100
DBK/DBK + NMP (wt%)

Fig. 9

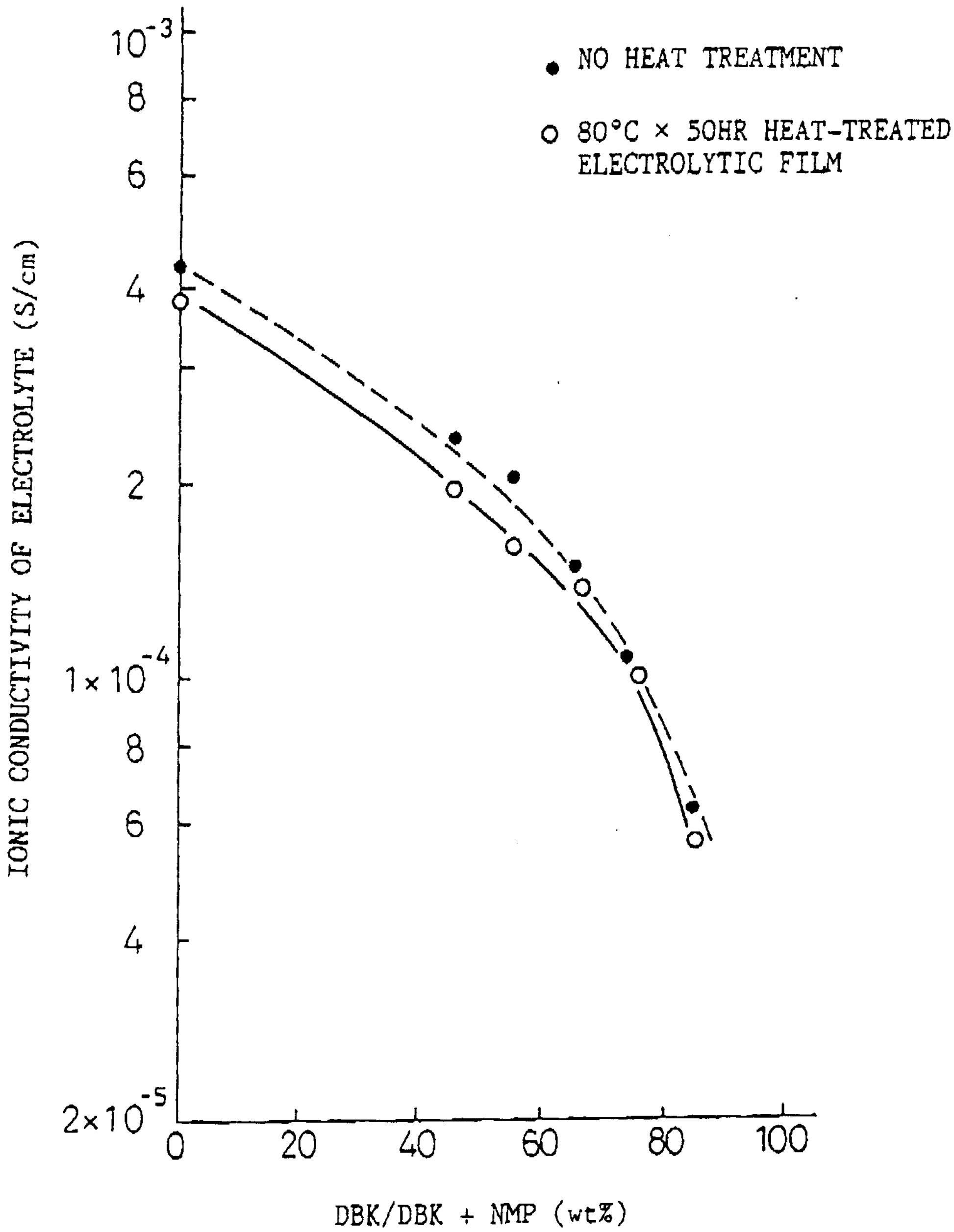

NO HEAT TREATMENT
80°C × 50HR HEAT-TREATED ELECTROLYTIC FILM
IONIC CONDUCTIVITY OF ELECTROLYTE (S/cm)
10⁻³
8
6
4
2
1×10⁻⁴
8
6
4
2×10⁻⁵
0
20
40
60
80
100
DBK/DBK + NMP (wt%)

Fig.10

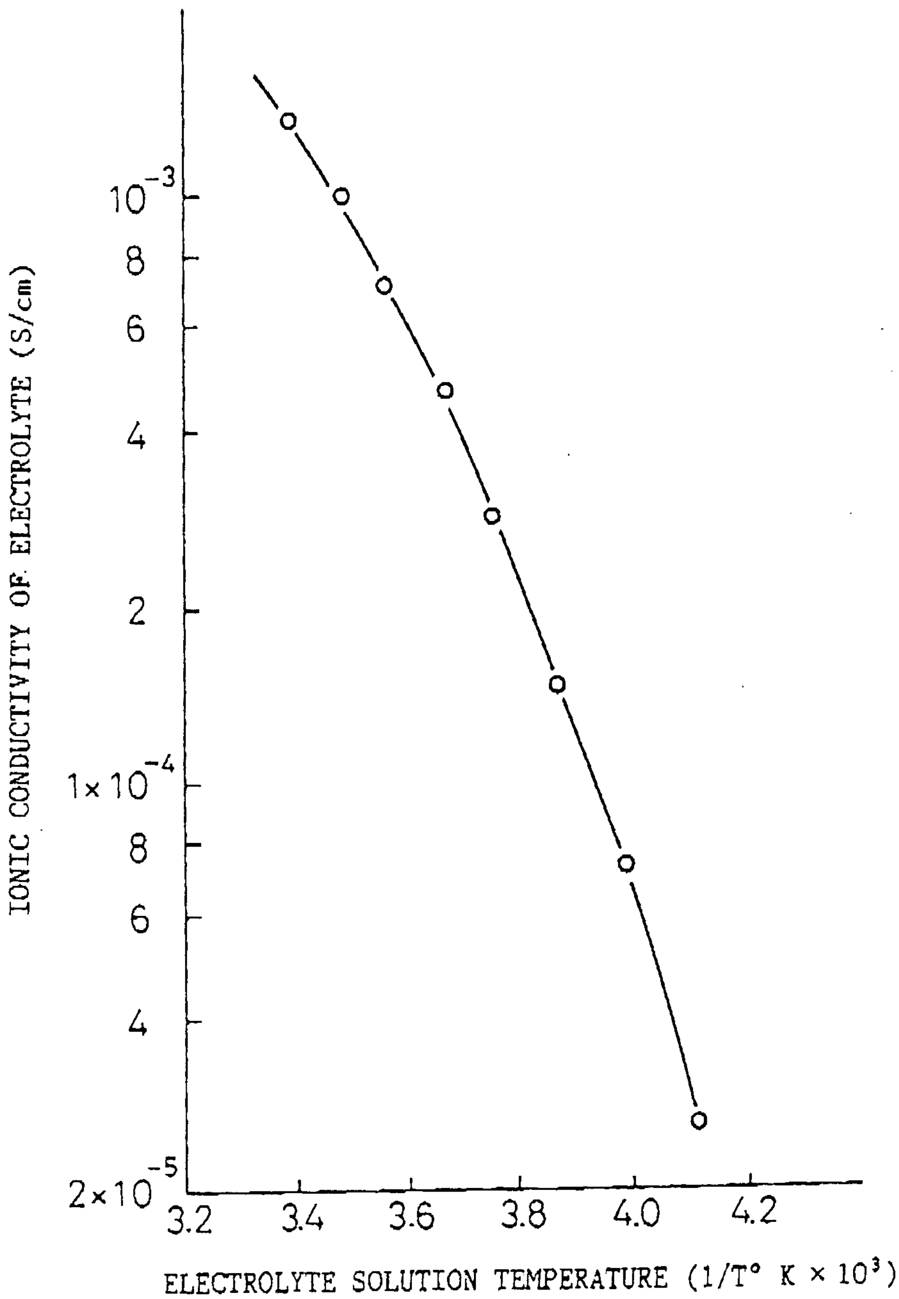
$10^{-3}$
8
6
4
2
$1\times10^{-4}$
8
6
4
$2\times10^{-5}$
3.2
3.4
3.6
3.8
4.0
4.2
IONIC CONDUCTIVITY OF ELECTROLYTE (S/cm)
ELECTROLYTE SOLUTION TEMPERATURE (1/T° K × $10^3$)

Fig.11

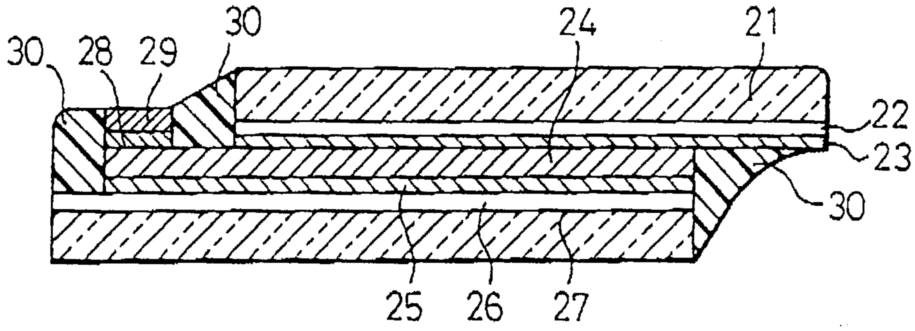


Fig.12A

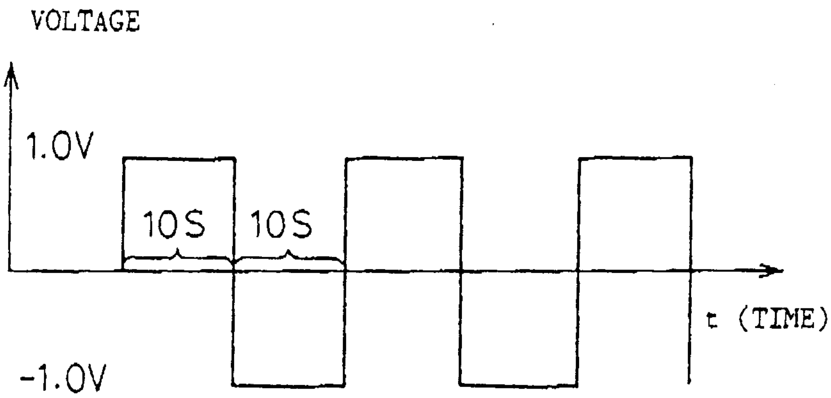


Fig.12B

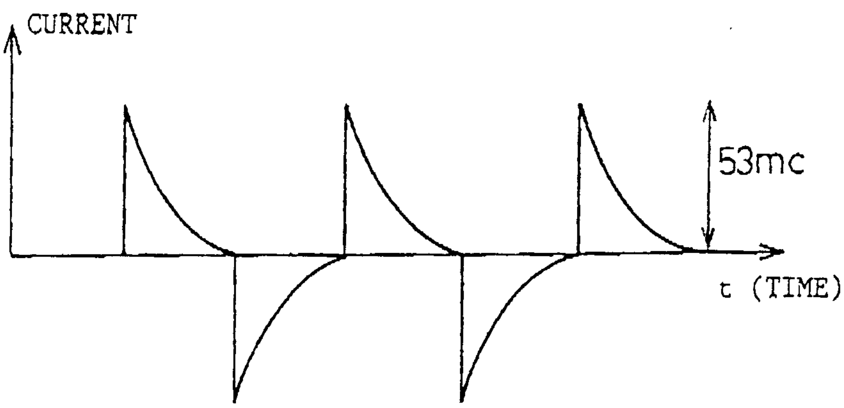

Fig.13

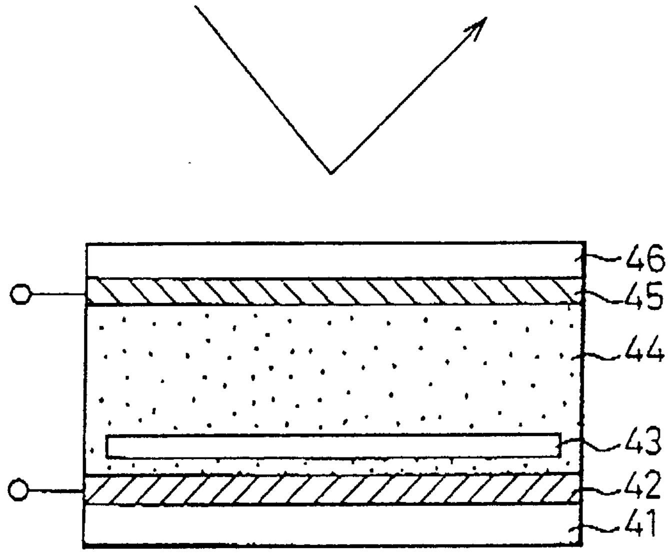


Fig.14

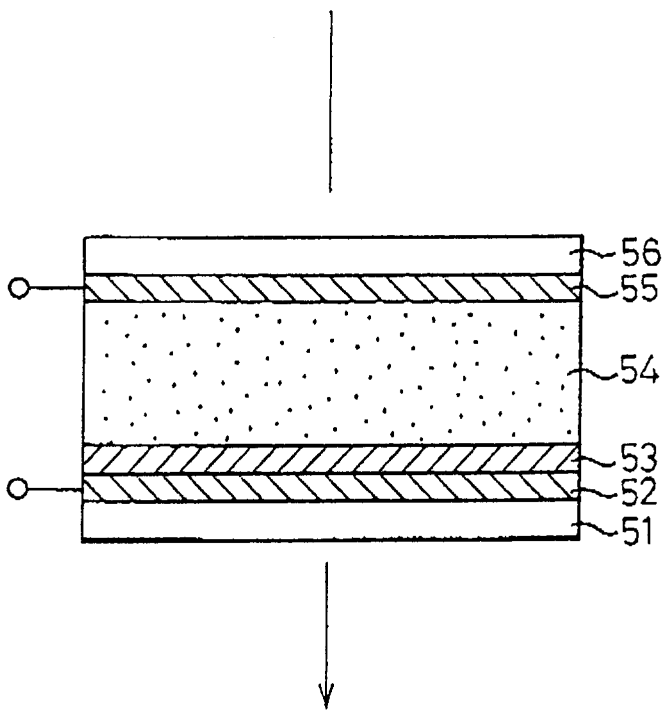

**INTERNATIONAL SEARCH REPORT**

International application No.
PCT/JP93/01931

A. CLASSIFICATION OF SUBJECT MATTER

Int. $Cl^5$ G02F1/15

According to International Patent Classification (IPC) or to both national classification and IPC

B. FIELDS SEARCHED

Minimum documentation searched (classification system followed by classification symbols)

Int. $Cl^5$ G02F1/15

Documentation searched other than minimum documentation to the extent that such documents are included in the fields searched

Jitsuyo Shinan Koho 1966 - 1993
Kokai Jitsuyo Shinan Koho 1971 - 1993

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP, A, 3-67227 (Tonen Corp.), March 22, 1991 (22. 03. 91), Lines 6 to 8, lower left column, page 1, (Family: none) | 1 |
| P | JP, A, 4-324841 (Tonen Corp.), November 13, 1992 (13. 11. 92), Lines 2 to 15, column 1, (Family: none) | 1 |
| P | JP, A, 5-34732 (Tonen Corp.), February 12, 1993 (12. 02. 93), Lines 2 to 8, column 1, (Family: none) | 1-3 |
| | JP, A, 5-203998 (Tonen Corp.), August 13, 1993 (13. 08. 93), | |
| P | Line 26, column 4 to line 25, column 5 | 1-3, 5, 6 |
| P | Lines 38 to 40, column 5, (Family: none) | 4 |
| A | JP, U, 1-128226 (Kaimeido K.K.), September 1, 1989 (01. 09. 89), (Family: none) | 10 |

☐ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| March 22, 1994 (22. 03. 94) | April 26, 1994 (26. 04. 94) |
| Name and mailing address of the ISA/ Japanese Patent Office | Authorized officer |
| Facsimile No. | Telephone No. |